# EUROPÄISCHE PATENTSCHRIFT

(11) **EP 1 940 940 B1**
(45) Veröffentlichungstag und Bekanntmachung des Hinweises auf die Patenterteilung: **20.04.2011**
(21) Anmeldenummer: 06807012.7
(22) Anmeldetag: 05.10.2006
(51) Int. Cl.: C08K 9/06

(54) **ZWITTERIONISCHE STRUKTURELEMENTE AUFWEISENDE PARTIKEL**
PARTICLES COMPRISING ZWITTERIONIC STRUCTURAL ELEMENTS
PARTICULES PRESENTANT DES MOTIFS CONSTITUTIFS ZWITTERIONIQUES

(30) Priorität: 27.10.2005 DE 102005051587
(43) Veröffentlichungstag der Anmeldung: 09.07.2008
(73) Patentinhaber: Consortium für elektrochemische Industrie GmbH, 81379 München (DE)
(72) Erfinder: BRIEHN, Christoph, 81369 München (DE); BAUMANN, Martina, 82054 Sauerlach (DE); GOTTSCHALK-GAUDIG, Torsten, 84561 Mehring (DE); BALL, Peter, 84547 Emmerting (DE); HÖLZL, Manfred, 81377 München (DE)
(74) Vertreter: Fritz, Helmut
(86) Internationale Anmeldenummer: PCT/EP2006/067105
(87) Internationale Veröffentlichungsnummer: WO 2007/048691

(56) Entgegenhaltungen:
- US-A- 4 493 926
- US-A1- 2005 053 818
- SNOW, STEVEN A. ET AL: "Synthesis and characterization of zwitterionic silicone sulfobetaine surfactants" LANGMUIR , 6(2), 385-91 CODEN: LANGD5; ISSN: 0743-7463, Bd. 6, 1990, Seite 385, XP002428884 in der Anmeldung erwähnt

## Beschreibung

Die Erfindung betrifft zwitterionische Strukturelemente auf der Oberfläche aufweisende Partikel, sowie deren Herstellung und Verwendungen, insbesondere in Kompositmaterialien.

Als Füllstoff werden fein verteilte Partikel bezeichnet, welche durch Zugabe zu einer Matrix deren Eigenschaften verändert. Füllstoffe werden heutzutage in der chemischen Industrie für viele Zwecke eingesetzt. Sie können die mechanischen Eigenschaften von Kunststoffen verändern wie z.B. Härte, Reißfestigkeit, Chemikalienbeständigkeit, elektrische, thermische und ionische Leitfähigkeiten, Haftung oder auch den Wärmeausdehnungskoeffizienten. Durch eine Oberflächenmodifizierung der Füllstoffe lässt sich in der Regel die Verträglichkeit des Füllstoffes mit der Matrix beeinflussen und damit das Eigenschaftsprofil des Komposits wesentlich verbessern. Bevorzugt kommen dabei modifizierte Füllstoffe zum Einsatz, die gegenüber der Polymermatrix reaktiv sind. So können beispielsweise carbinolfunktionelle Partikel kovalent an ein isocyanatfunktionelles Harz angebunden werden. Ein solcher chemischer Einbau eines Füllstoffs in die Polymermatrix geht häufig mit einer erheblichen Eigenschaftsverbesserung wie beispielsweise einer mechanischen Verstärkung einher. Eine vergleichbare mechanische Verstärkung eines Polymers beobachtet man, wenn man einen polaren oder ionischen Füllstoff in eine entsprechend polare oder ionische Matrix einarbeitet. In diesem Fall wird die mechanische Verstärkung durch rein physikalische Wechselwirkungen (ionische Wechselwirkungen, Dipol-Dipol-Wechselwirkungen) zwischen Füllstoff und Matrix erzielt.

Gängige protonenleitende Polymerelektrolytmembranen (PEM), wie man sie beispielsweise zur Herstellung von Brennstoffzellen verwendet, sind aus Polymeren aufgebaut, die über kovalent gebundene protonenleitende Gruppen, insbesondere Sulfonsäure- oder Aminogruppen, verfügen.

Ein häufig auftretendes Problem beim Einsatz der Polymerelektrolytmembranen in Brennstoffzellen ist die geringe mechanische Stabilität der Membranen. Eine hohe mechanische Stabilität der Membranen u.a. gegenüber dem Druck der als Brennstoff eingesetzten Gase ist für einen technischen Einsatz der Brennstoffzellen jedoch zwingend erforderlich. Insbesondere beim Einsatz von Polymerelektrolytmembranen in Brennstoffzellen für automobile Anwendungen sind Membranmaterialien erforderlich, die sehr hohen mechanischen Belastungen standhalten können.

Ein besonders vorteilhafter Weg zur Lösung dieser Aufgabe ist die Verwendung von Füllstoffen, die zu einer mechanischen Verstärkung der Polymermatrix befähigt sind. Verfügen die Füllstoffe zusätzlich über protonenleitende Funktionen auf ihrer Oberfläche bzw. handelt es sich bei den eingesetzten Füllstoffen um Materialien mit intrinsischer Leitfähigkeit, lässt sich zusätzlich zu einer Verbesserung der mechanischen Stabilität auch eine verbesserte Protonenleitfähigkeit der Kompositmembran erwarten. Zudem kann bei Verwendung geeigneter Füllstoffe die unerwünschte Permeabilität für den Brennstoff zurückgedrängt werden.

Derartige Kompositmembranen bestehend aus protonenleitenden Polymeren und anorganischen Partikeln sind literaturbekannt. So werden in den Schriften US 2004/0053060, US 5 919 583, WO 0045447, US 2005/0053818 sowie JP 2001/155744 Mischungen beschrieben, die aus einem protonenleitenden organischen Polymer und unmodifizierten bzw. modifizierten anorganischen Füllstoffen bestehen. Als Füllstoffe werden u.a. unmodifizierte Kieselsole, aminoalkylfunktionelle Kieselsole sowie sulfonsäurefunktionelle Kieselsole und als organische Polymere sulfonierte perfluorierte Kohlenwasserstoffe sowie sulfonierte Polyetherketone eingesetzt.
Tatsächlich lässt sich das Eigenschaftsprofil der Membranen durch den Einbau von derartigen Partikeln merklich verbessern. Allerdings werden bei sämtlichen im Stand der Technik beschriebenen Systemen noch keine optimalen Ergebnisse erzielt. Insbesondere weisen die entsprechenden Kompositmembranen noch eine unzureichende Protonenleitfähigkeit und eine für einen technischen Einsatz ungenügende mechanische Stabilität, die sich u.a. in einem zu geringen E-Modul und einer unzureichenden Zugfestigkeit zeigt, auf.

Ein möglicher Weg zur Verbesserung dieser Eigenschaften ist die Verwendung von Füllstoffen, die zwitterionische Strukturelemente tragen, in denen kationische und anionische Gruppierungen kovalent miteinander verbunden sind. Derartige Füllstoffe sowie deren Einsatz zur Herstellung von Kompositmaterialien werden in der Literatur nicht beschrieben.

Literaturbekannt sind dagegen Silane und Siloxane mit zwitterionischen Strukturelementen, die sich beispielsweise durch Umsetzung eines Aminosilans oder eines aminofunktionellen Siloxans mit einer halogenierten Carbonsäure oder einem Alkylsulton erhalten lassen. LITT et al. lehren in J. Appl. Polym. Sci. 1975, 19, 1221-1225 die Herstellung zweier zwitterionischer Alkoxysilane durch Umsetzung von Aminopropyl-triethoxysilan bzw. *N*-Aminoethylaminopropyl-trimethoxysilan mit 1,3-Propansulton.
In den Schriften DE 3 417 912 und DE 3 422 268 werden zwitterionische organofunktionelle Siloxane beschrieben, die durch Quarternisierung aminoalkylsubstituierter Polydimethylsiloxane mittels m-Halogenalkylcarboxylaten zugänglich sind. Zwitterionische Polysiloxane, die durch Umsetzung von ethylendiamino-funktionellen Polysiloxanen mit 1,3-Propansulton erhalten werden, beschreibt GRAIVER et al. in J. Polymer Sci. 1979, 17, 3559-3572.
SNOW et al. lehren in der US 4 918 210 sowie in Langmuir 1990, 6, 385-391 die Herstellung von Polysiloxanen, die quartäre Ammoniumalkylsulfonat-Gruppen enthalten sowie deren Verwendung als oberflächenaktive Substanzklasse, mit der die Oberflächenspannung wässriger Lösungen erheblich erniedrigt werden kann. Die Silicon-Sulfobetaine erniedrigen dabei die Oberflächenspannung bei wesentlich niedrigeren Reagenz-Konzentrationen als die entsprechend funktionalisierten organischen Agentien.
In der US 4 496 705 werden derartige zwitterionische Siloxane, die in der Literatur gelegentlich als Silicon-Sulfobetaine bezeichnet werden, als thermoplastische Elastomere beschrieben, die sich aufgrund ihrer guten Haftung auf Holz, Metall, Polycarbonat und Polystyrol u.a. als Dicht- und Klebstoff und als Beschichtungsmittel eignen. Die thermoplastischen und insbesondere die hervorragenden mechanischen Eigenschaften der zwitterionischen Siloxane werden dabei auf eine ionische Vernetzung benachbarter zwitterionischer Siloxanstränge zurückgeführt.

Gegenstand der Erfindung sind Partikel (PS), herstellbar durch ein Verfahren, bei dem Partikel (P) mit silanen oder siloxanen (S) umgesetzt werden, die über mindestens ein Strukturelement, ausgewählt aus den allgemeinen Formeln [1] bis [3],

-NR₂⁺-B-A⁻ [1],

=NR⁺-B-A⁻ [2],

=N⁺-B-A⁻ [3],

und den protonierten und deprotonierten Formen der Strukturelemente der allgemeinen Formeln [1] bis [3] verfügen, wobei
- **A**: einen Sulfonatrest -SO₃, einen Carboxylatrest -C(O)O oder einen Phosphonatrest -P(O)(OR⁷)O,
- **B**: (CR¹₂)ₘ, einen durch Heteroatome unterbrochene gegebenenfalls substituierten Alkylrest, Aryl- oder Heteroarylrest,
- **R und R⁷**: Wasserstoff oder einen gegebenenfalls substituierten Kohlenwasserstoffrest und
- **R¹**: Wasserstoff, Halogene oder einen gegebenenfalls substituierten Kohlenwasserstoffrest bedeuten und
- **m**: die Werte 1, 2, 3, 4 oder 5 annehmen kann,
mit der Maßgabe, dass das Stickstoffatom in der allgemeinen Formel [2] als endocyclisches Stickstoffatom Teil eines aliphatischen Heterozyklus ist, und mit der Maßgabe, dass das Stickstoffatom in der allgemeinen Formel [3] als endocyclisches Stickstoffatom Teil eines aromatischen Heterozyklus ist.

Der Erfindung liegt die Entdeckung zugrunde, dass sich die erfindungsgemäßen Partikel (PS) zur Herstellung von Kompositmaterialien, insbesondere für die Herstellung von Membranen eignen, die eine wesentlich bessere mechanische Stabilität und Protonenleitfähigkeit aufweisen als die entsprechenden literaturbekannten Systeme. Die Partikel (PS) weisen zwitterionische Strukturelemente auf der Oberfläche auf.

Die Strukturelemente der allgemeinen Formeln [1] bis [3] können in Abhängigkeit vom pH-Wert des umgebenden Mediums kationisch, d.h. mit einer positiven Gesamtladung, beispielsweise durch Protonierung von A⁻, oder zwitterionische, d.h. in ungeladener Form, vorliegen. Ist in den Strukturelementen der allgemeinen Formeln [1] und [2] der Rest **R** gleich Wasserstoff, können die Strukturelemente auch durch Umsetzung mit einer Base als anionische Spezies, d.h. mit einer negativen Gesamtladung, vorliegen. Im folgenden Text werden die mit den Strukturelementen der allgemeinen Formeln [1] bis [3] funktionalisierten Silane und Siloxane (S) sowie die entsprechend modifizierten Partikel (PS) unabhängig von ihrer Gesamtladung als zwitterionische Silane und Siloxane bzw. Partikel bezeichnet.

Der Rest **B** ist vorzugsweise Ethyl, Propyl, Butyl, Phenyl sowie die entsprechenden teil- und perfluorierten Reste.

Die Reste **R, R¹** und **R⁷** sind vorzugsweise Wasserstoff, Halogene insbesondere Fluor und Chlor, aliphatische oder aromatische Kohlenwasserstoffe mit 1 bis 10, insbesondere 1 bis 6 Kohlenstoffatomen. Besonders bevorzugt sind die Reste Methyl, Ethyl, n-Propyl, i-Propyl und Phenyl sowie perfluorierte Methyl-, Ethyl-, n-Propyl- und Phenyl-Gruppen.

m nimmt bevorzugt die Werte 2, 3 oder 4 an. Die aliphatischen Heterozyklen, die Teil des Strukturelements der allgemeinen Formel [2] sind, stellen bevorzugt ein gegebenenfalls substituiertes Aziridin, Pyrrolidin, Piperazin und Piperidin dar. Die aromatischen Heterozyklen, die Teil des Strukturelements der allgemeinen Formel [3] sind, stellen bevorzugt ein gegebenenfalls substituiertes Pyridin, Pyrrol, Imidazol, Benzimidazol, Indol, Chinolin, Benzbxazol, Benzthiazol, Pyrazol oder Triazol dar.

Die erfindungsgemäßen Partikel (PS) besitzen bevorzugt eine spezifische Oberfläche von 0,1 bis 1000 m²/g, besonders bevorzugt von 10 bis 500 m²/g (gemessen nach der BET-Methode nach DIN EN ISO 9277/DIN 66132). Die mittlere Größe der Primärteilchen beträgt bevorzugt kleiner 10 µm, besonders bevorzugt kleiner 1000 nm, wobei die Primärteilchen als Aggregate (Definition nach DIN 53206) und Agglomerate (Definition nach DIN 53206) vorliegen können, die in Abhängigkeit von der äußeren Scherbelastung (z.B. bedingt durch die Messbedingungen) Größen von 1 bis 1000 µm aufweisen können.

Im Partikel (PS) können die Strukturelemente der allgemeinen Formeln [1] bis [3] kovalent, über ionische oder van-der-Waals-Wechselwirkungen angebunden sein. Bevorzugt sind die Strukturelemente der allgemeinen Formeln [1] bis [3] kovalent angebunden.

Ein weiterer Gegenstand der Erfindung ist ein Verfahren zur Herstellung der Partikel (PS), bei dem Partikel (P) mit Silanen oder Siloxanen (S) umgesetzt werden, die über mindestens ein Strukturelement der allgemeinen Formeln [1] bis [3] verfügen.

In einem besonders bevorzugten Verfahren zur Herstellung der Partikel (PS) werden Partikel (P) mit Funktionen, die ausgewählt werden aus Metall-OH, Metall-O-Metall, Si-OH, Si-O-Si, Si-O-Metall, Si-X, Metall-X, Metall-OR², Si-OR² mit Silanen, Siloxanen (S) oder deren Hydrolyse-, Alkoholyse- und Kondensationsprodukten umgesetzt, die über mindestens ein Strukturelement der allgemeinen Formeln [1] bis [3] sowie über mindestens eine reaktive Silylgruppe

≡Si-Y

verfügen, die gegenüber den Oberflächenfunktionen des Partikels (P) reaktiv sind,
wobei
- **R²**: einen gegebenenfalls substituierten Alkylrest,
- **X**: ein Halogenatom und
- **Y**: ein Halogen, eine Hydroxy- oder Alkoxygruppe, ein Carboxylat oder ein Enolat darstellt,
mit der Maßgabe, dass das Stickstoffatom in der allgemeinen Formel [2] als endocyclisches Stickstoffatom Teil eines aliphatischen Heterozyklus ist, über den die kovalente Anbindung an das Silan oder Siloxan (S) erfolgt, und mit der Maßgabe, dass das Stickstoffatom in der allgemeinen Formel [3] als endocyclisches Stickstoffatom Teil eines aromatischen Heterozyklus ist, über den die kovalente Anbindung an das Silan oder Siloxan (S) erfolgt.

**R²** ist vorzugsweise ein Alkylrest mit 1 bis 10, insbesondre 1 bis 6 Kohlenstoffatomen. Besonders bevorzugt sind die Reste Methyl, Ethyl, n-Propyl, 1-propyl. **X** ist vorzugsweise, Fluor oder Chlor.
Bei den Resten **Y** handelt es sich bevorzugt um ein Halogen, Hydroxy- oder Alkoxygruppen. Besonders bevorzugt stellen die Reste **Y** Chloratome, Hydroxy-, Ethoxy- oder Methoxyreste dar.

Ein weiterer Gegenstand der Erfindung ist ein Verfahren zur Herstellung der Partikel (PS), bei dem die Anbindung der Strukturelemente der allgemeinen Formeln [1] bis [3] während der Partikelsynthese erfolgt. Dabei können die Strukturelemente der allgemeinen Formeln [1] bis [3] Teil eines an der Partikelherstellung beteiligten Synthesebausteins darstellen.

Alternativ kann die Herstellung der Partikel (PS) in einem zweistufigen Verfahren erfolgen. In einer ersten Stufe werden Partikel (P) mit einem organofunktionellen Reagenz zu einem organofunktionellen Partikel (P') umgesetzt. Die Organofunktionen des Partikels (P') können anschließend in einer zweiten Stufe durch Reaktion mit einem weiteren Reagenz in die Strukturelemente der allgemeinen Formel [1] bis [3] umgewandelt werden. Beispielsweise wird das Partikel (P) durch Reaktion mit einem aminofunktionellen Silan in ein aminofunktionelles Partikel (P') umgewandelt, welches in einer Folgereaktion mit 1,3-Propansulton in das Partikel (PS) enthaltend das Strukturelement der allgemeinen Formel [1] überführt wird.

Als Partikel (P) eignen sich aus Gründen der technischen Handhabbarkeit Oxide mit kovalentem Bindungsanteil in der Metall-Sauerstoff-Bindung, vorzugsweise Oxide der 3. Hauptgruppe, wie Bor-, Aluminium-, Gallium- oder Indiumoxide, der 4. Hauptgruppe, wie Siliciumdioxid, Germaniumdioxid, Zinnoxid, Zinndioxid, Bleioxid, Bleidioxid, oder Oxide der 4. Nebengruppe, wie Titanoxid, Zirkoniumoxid und Hafniumoxid. Weitere Beispiele sind Nickel-, Cobalt-, Eisen-, Mangan-, Chrom- und Vanadiumoxide.
Zudem eignen sich Metalle mit oxidierter Oberfläche, Zeolithe (eine Auflistung geeigneter Zeolithe findet sich in: Atlas of Zeolite Framework Types, 5th edition, Ch. Baerlocher, W.M. Meier D.H. Olson, Amsterdam: Elsevier 2001), Silikate, Aluminate, Aluminophosphate, Titanate und Aluminiumschichtsilikate (z.B. Bentonite, Montmorillonite, Smektite, Hektorite), wobei die Partikel (P) bevorzugt eine spezifische Oberfläche von 0,1 bis 1000 m²/g, besonders bevorzugt von 10 bis 500 m²/g aufweisen (gemessen nach der BET-Methode nach DIN 66131 und 66132). Die Partikel (P), die bevorzugt einen mittleren Durchmesser von kleiner 10 µm, besonders bevorzugt kleiner 1000 nm, aufweisen, können als Aggregate (Definition nach DIN 53206) und Agglomerate (Definition nach DIN 53206) vorliegen, die in Abhängigkeit von der äußeren Scherbelastung (z.B. bedingt durch die Messbedingungen) Größen von 1 bis 1000 µm aufweisen können.

Besonders bevorzugt als Partikel (P) ist pyrogene Kieselsäure, die in einer Flammenreaktion aus Organosiliziumverbindungen hergestellt wird, z.B. aus Siliziumtetrachlorid oder Methyldichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliziumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne Zusatz von Wasser erfolgen, zum Beispiel im Schritt der Reinigung; bevorzugt ist kein Zusatz von Wasser.

Pyrogen hergestellte Kieselsäure oder Siliziumdioxid ist beispielsweise bekannt aus Ullmann's Enzyklopädie der Technischen Chemie 4. Auflage, Band 21, Seite 464.

Die unmodifizierte pyrogene Kieselsäure hat eine spezifische BET-Oberfläche, gemessen gemäß DIN EN ISO 9277 / DIN 66132 von 10 m²/g bis 600 m²/g, bevorzugt von 50 m²/g bis 400 m²/g.

Vorzugsweise weist die unmodifizierte pyrogene Kieselsäure eine Stampfdichte gemessen gemäß DIN EN ISO 787-11 von 10 g/l bis 500 g/l, bevorzugt von 20 g/l bis 200 g/l und besonders bevorzugt von 30 g/l bis 100 g/l auf.

Vorzugsweise weist die pyrogene Kieselsäure eine fraktale Dimension der Oberfläche von vorzugsweise kleiner oder gleich 2,3 auf, besonders bevorzugt von kleiner oder gleich 2,1, im besonderen bevorzugt von 1,95 bis 2,05, wobei die fraktale Dimension der Oberfläche Dₛ hierbei definiert ist als: Partikel-Oberfläche A ist proportional zum Partikel-Radius R hoch Dₛ.

Vorzugsweise weist die Kieselsäure eine fraktale Dimension der Masse Dₘ von vorzugsweise kleiner oder gleich 2,8, bevorzugt kleiner oder gleich 2,3, besonders bevorzugt von 1,7 bis 2,1 auf, wie z.B. gegeben in F. Saint-Michel, F. Pignon, A. Magnin, J. Colloid Interface Sci. 2003, 267, 314. Die fraktale Dimension der Masse Dₘ ist hierbei definiert als: Partikel-Masse M ist proportional zum Partikel-Radius R hoch Dₘ.
Vorzugsweise weist die unmodifizierte Kieselsäure eine Dichte an Oberflächen-Silanolgruppen SiOH von kleiner als 2,5 SiOH / nm², vorzugsweise kleiner 2,1 SiOH / nm², bevorzugt von kleiner als 2 SiOH / nm², besonders bevorzugt von 1,7 bis 1,9 SiOH / nm² auf, bestimmt gemäß einer Methode wie gegeben in G.W. Sears, Anal. Chem. 28 (1956) 1981.
Es können auf nasschemisch hergestelltem Weg oder bei hoher Temperatur (> 1000 °C) hergestellte Kieselsäuren eingesetzt werden. Besonders bevorzugt sind pyrogen hergestellte Kieselsäuren. Es können auch hydrophile Kieselsäuren eingesetzt werden, die frisch hergestellt direkt aus dem Brenner kommen, zwischengelagert oder bereits handelsüblich verpackt sind. Es können auch hydrophobierte Metalloxide oder Kieselsäuren, z.B. handelsübliche Kieselsäuren, eingesetzt werden.

Es können Gemische aus verschiedenen Metalloxiden oder Kieselsäuren eingesetzt werden, so z.B. Mischungen aus Metalloxiden oder Kieselsäuren unterschiedlicher BET-Oberfläche, oder Mischungen aus Metalloxiden mit unterschiedlichem Hydrophobier- oder Silyliergrad.

In einer weiteren bevorzugten Ausführung der Erfindung werden als Partikel (P) kolloidale Silizium- oder Metalloxide eingesetzt, die im allgemeinen als Dispersion der entsprechenden Oxidteilchen von Submikrongröße in einem wäßrigen oder organischen Lösungsmittel vorliegen. Dabei können unter anderem die Oxide der Metalle Aluminium, Titan, Zirkonium, Tantal, Wolfram, Hafnium und Zinn oder die entsprechenden Mischoxide verwendet werden. Besonders bevorzugt ist sind Kieselsole. Beispiele für kommerziell erhältliche Kieselsole, die sich zur Herstellung der Partikel (PS) eignen, sind Kieselsole der Produktserien LUDOX® (Grace Davison), Snowtex® (Nissan Chemical), Klebosol® (Clariant) und Levasil® (H.C. Starck), oder solche Kieselsole, die sich nach dem Stöber-Verfahren herstellen lassen.

In einer weiteren bevorzugten Ausführung der Erfindung werden als Partikel (P) Organopolysiloxane der allgemeinen. Formel [4],

[R³₃SiO_{1/2}]ᵢ[R³₂SiO_{2/2}]ⱼ[R³SiO_{3/2}]ₖ[SiO_{4/2}]₁ [4]

eingesetzt, wobei
- **R³**: eine OH-Funktion, einen gegebenenfalls halogen-, hydroxyl-, amino-, epoxy-, phosponato-, thiol-, (meth)acryl-, carbamat- oder auch NCO-substituierten Kohlenwasserstoffrest mit 1-18 Kohlenstoffatomen, wobei die Kohlenstoffkette durch nicht benachbarte Sauerstoff-, Schwefel-, oder N**R^{3'}**-Gruppen unterbrochen sein kann,
- **R^{3'}**: die Bedeutungen von **R¹,**
- **i, j, k, l**: einen Wert von größer oder gleich 0 bedeuten,
mit der Maßgabe, dass **i + j + k + l** größer oder gleich 3, insbesondere mindestens 10 sind und dass mindestens 1 Rest **R³** eine OH-Funktion bedeutet.

In einer bevorzugten Ausführungsform der Erfindung weisen die zur Modifizierung der Partikel (P) eingesetzten Silane (S) eine Struktur gemäß der allgemeinen Formel [5],

(R⁴O)₃₋ₐR⁴ₐSi-(CH₂)ₙ-NR₂⁺-(CH₂)ₘ-A⁻ [5]

auf, wobei
- **a**: die Werte 0, 1 oder 2 und
- **n**: die Werte 1, 2 oder 3 bedeuten,

**R⁴** die Bedeutungen von **R¹** aufweist und **R, A** und **m** die bei den Formeln [1] bis [4] angegebenen Werte annehmen können.

Dabei nimmt **n** bevorzugt den Wert 1 oder 3 an.

In einer weiteren bevorzugten Ausführungsform der Ereindung weisen die zur Modifizierung der Partikel (P) eingesetzten Silane (S) eine Struktur gemäß der allgemeinen Formel [6],

(R⁴O)₃₋ₐR⁴ₐSi-(CH₂)ₙ-K⁺-(CH₂)ₘ-A⁻ [6]

auf, wobei
- **K**: einen gegebenenfalls substituierten Aryl- bzw. Heteroarylrest bedeutet, der über mindestens einen vierfach gebundenen Stickstoff =N- verfügt,
- **a**: die Werte 0, 1 oder 2 und
- **n**: die Werte 1, 2 oder 3 bedeuten,
und **R⁴, A**, **m** und **a** die bei Formel [1] bis [3] und [5] angegebenen Werte annehmen können.

Bei dem Rest **K** handelt es sich bevorzugt um Imidazolium-, Benzimidazolium-, Pyridinium-, 8-Mercaptochinolinium-, 2-Mercaptobenzimidazolium-, 2-Mercaptobenzoxazolium-, 2-Mercaptobenzthiazolium-, 3,5-Dimethylpyrazolium-, 1,2,4-Triazolium-, Indoliumgruppen. Dabei erfolgt die Anbindung der Gruppen (R⁴O)₃₋ₐR⁴ₐSi-(CH₂)ₙ- und -(CH₂)ₘ-A⁻ der allgemeinen Formel [6] über die Heteroatome Schwefel und/oder Stickstoff oder Kohlenstoffatome der Reste **K**.

In einer weiteren bevorzugten Ausführungsform der Erfindung weisen die zur Modifizierung der Partikel (P) eingesetzten Siloxane (S) eine Struktur gemäß der allgemeinen Formel [7],

[R⁵₃SiO_{1/2}]_{w}[R⁵₂SiO_{2/2}]ₓ[R⁵SiO_{3/2}]_{y}[SiO_{4/2}]_{z} [7]

auf, wobei
- **R⁵**: Wasserstoff oder einen gegebenenfalls substituierten Kohlenwasserstoffrest und mindestens ein Halogen, eine OH- oder eine Alkoxygruppe und mindestens ein Strukturelement der allgemeinen Formel [1] bis [3] aufweist und
- **w, x, y, z**: einen Wert von größer oder gleich 0 bedeuten,
mit der Maßgabe, dass **w** + **x** + **y** + **z** größer oder gleich 3, insbesondere mindestens 10 sind und dass mindestens 1 rest **R⁵** eine OH-Funktion bedeutet.

Beispiele für die zur Modifizierung der Partikel (P) bevorzugt eingesetzten Silane (S) sind Verbindungen der allgemeinen Formeln [H1] bis [H30], in denen **A** die bei Formel [1] bis [3] angegebenen Reste darstellt.

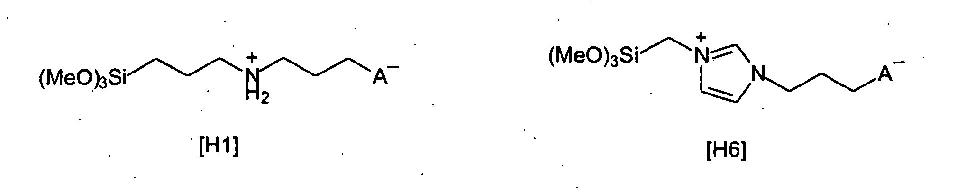

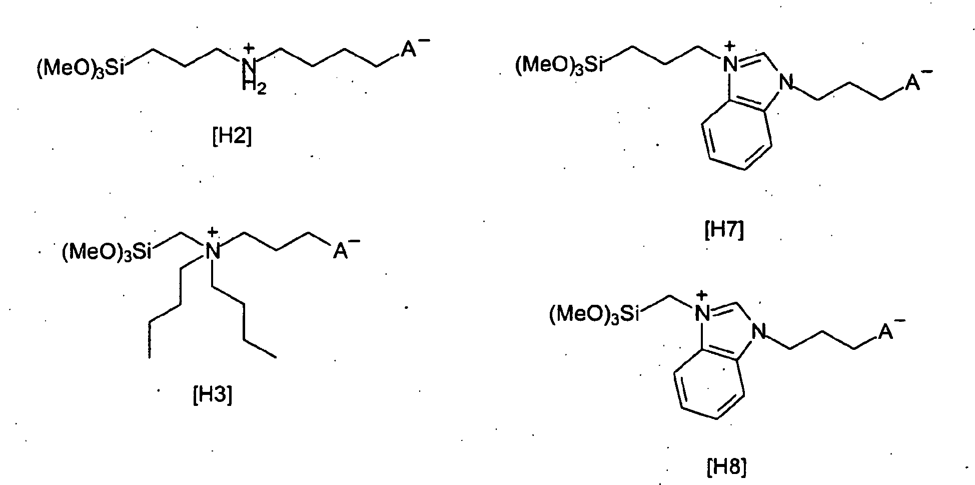

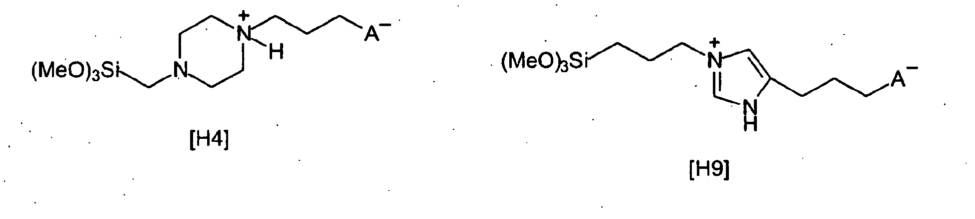

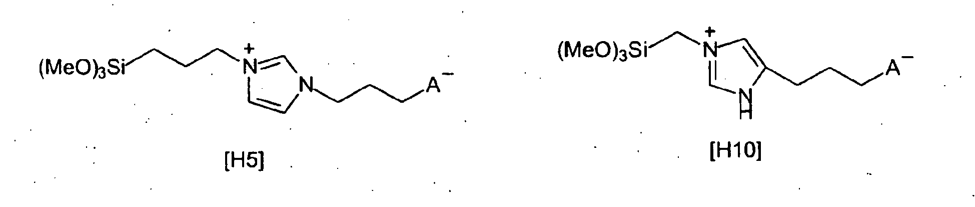

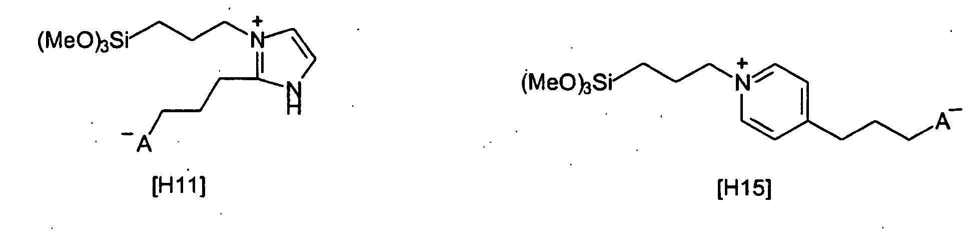

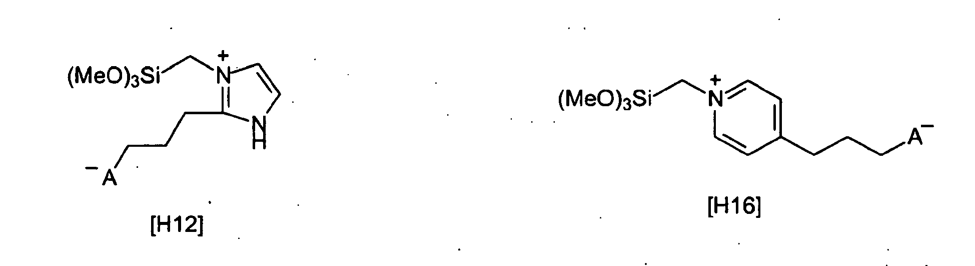

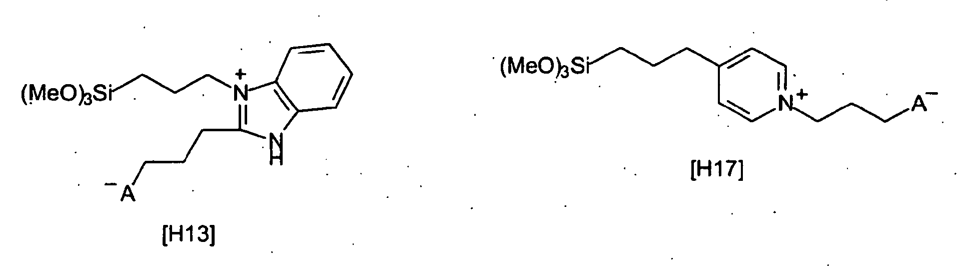

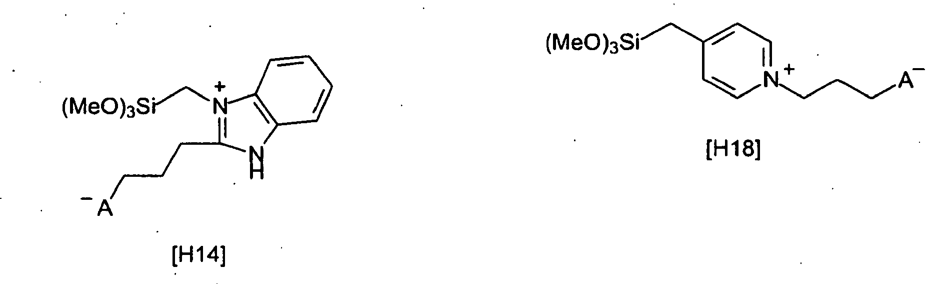

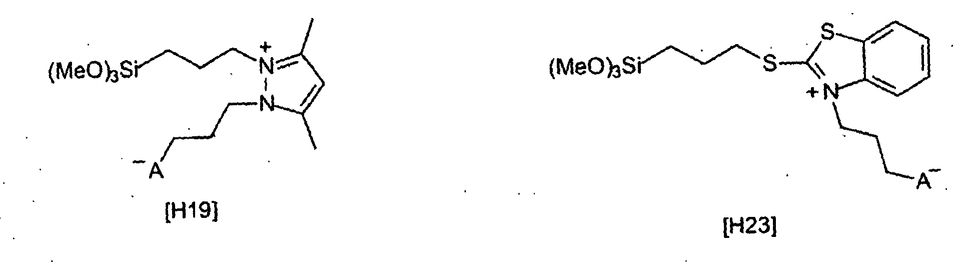

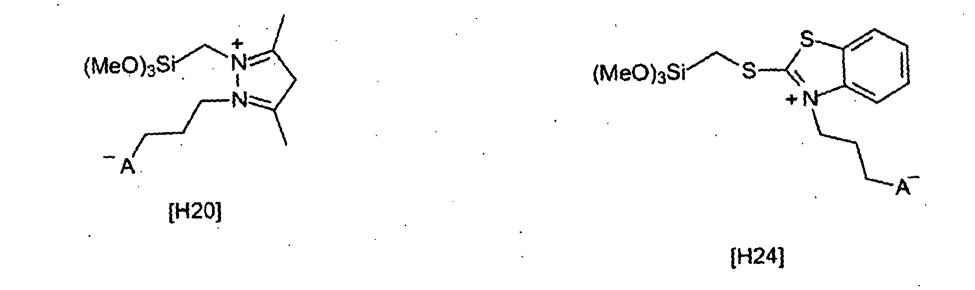

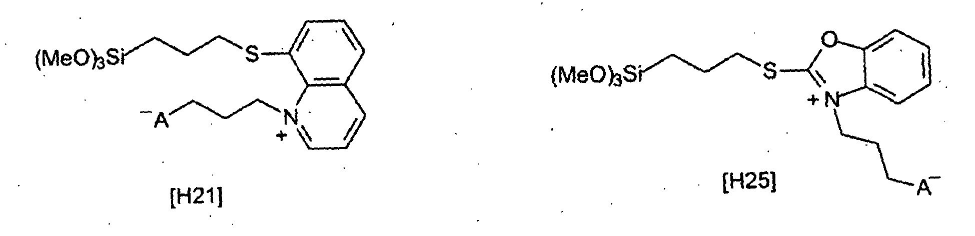

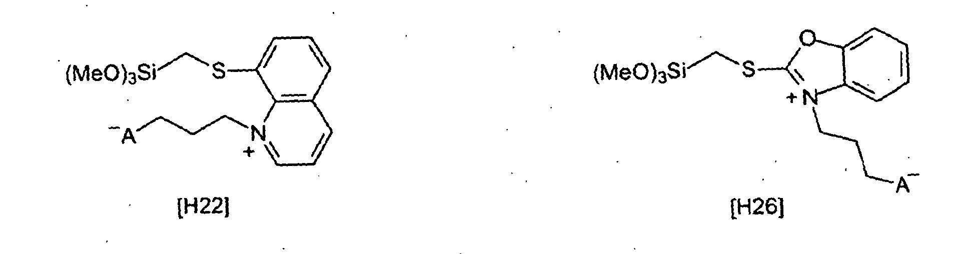

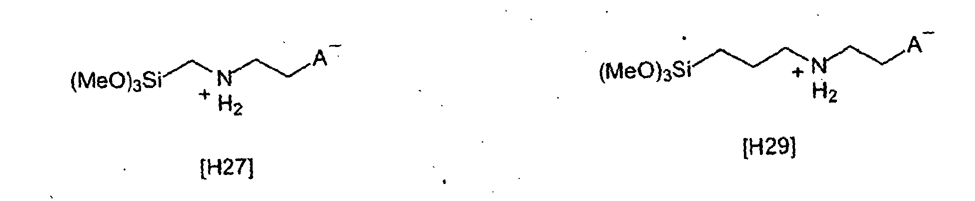

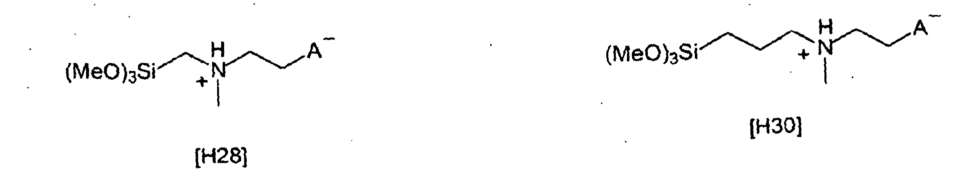

Die Silane und Siloxane (S) werden bevorzugt durch eine Reaktion der entsprechenden aminofunktionellen Silane bzw. Siloxane (S0) mit Alkylsultonen der allgemeinen Formel [8], Lactonen der allgemeinen Formel [9], ω-Halogenalkylcarboxylaten der allgemeinen Formel [10], ω-Halogenalkylsulfonaten der allgemeinen Formel [11],

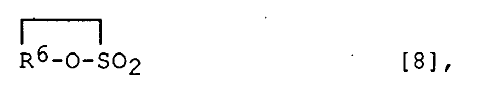

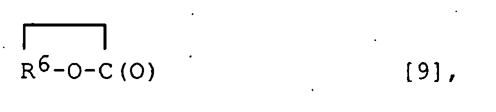

X¹-(CR¹₂)ₘ-C(O)OD [10],

X¹-(CR¹₂)ₘ-SO₃D [11],

erhalten, wobei
- **R⁶**: ein gegebenenfalls substituierter linearer oder verzweigter aliphatischer Kohlenwasserstoffrest,
- **X¹**: Chlor-, Brom- oder Iod und
- **D**: Wasserstoff, Lithium, Natrium oder Kalium darstellen und der Rest **R¹** sowie **m** die bei den allgemeinen Formeln [1] bis [3] angegebenen Werte annehmen.

**R⁶** ist bevorzugt ein linearer unsubstituierter oder Fluorsubstituierter Alkylrest.

In einem alternativen Verfahren werden epoxy- oder chloralkylfunktionelle Silane oder Siloxane (S1) mit Aminoalkylcarboxylaten der allgemeinen Formel [12] oder Aminoalkylsulfonaten der allgemeinen Formel [13] oder Aminoalkylphosphonaten der allgemeinen Formel [17],

R₂N-B=C(O)OD [12],

R₂N-B-SO₃D [13],

R₂N-B-P(O) (OR⁷) OD [17],

zur Reaktion gebracht, wobei **D** Wasserstoff, Lithium, Natrium oder Kalium darstellt und die Reste **R, B** sowie **R⁷** die bei den allgemeinen Formeln [1] bis [3] angegebenen Werte annehmen.

Die Silane und Siloxane (S) enthaltend die Strukturelemente der allgemeinen Formeln [1] bis [3] mit **A** = P(O)(OR⁷)O werden bevorzugt in einem zweistufigen Verfahren hergestellt. In einer ersten Stufe erfolgt die Herstellung eines aminofunktionellen Phosphonsäureesters beispielsweise durch Umsetzung aminofunktioneller Silane oder Siloxane (S0) mit vinylfunktionellen Phosphonsäureester der allgemeinen Formel [14], dialkylphosphonatfunktionellen Carbonsäureestern der allgemeinen Formel [15] oder ω-Halogenalkylphosphonaten der allgemeinen Formel [16]

R¹C=CR¹-P(O)(OR⁷) 2 [14]

X-B-P(O)(OR⁷)₂ [15]

R⁷-O-C (O) -B-P(O) (OR⁷)₂ [16],

wobei
**X²** ein Halogenatom, vorzugsweise Fluor oder Chlor und
**B, R¹** und **R⁷** die bei der allgemeinen Formel [1] bis [3] angegebenen Werte annehmen können.

In einer zweiten Stufe wird der aminofunktionelle Phosphonsäureester zu den ammoniumalkylphosphonatfunktionellen Silanen und Siloxanen (S) hydrolysiert. Die Hydrolyse der Phosphonatgruppen erfolgt z.B. nach dem von BARNES et al. in J. Org. Chem. 1960, 25, 1191-1194 beschriebenen Verfahren.

Bei diesen Umsetzungen werden die Strukturelemente der allgemeinen Formel [1] bis.[3] gebildet. Die Reaktionen können sowohl mit als auch ohne Katalysator erfolgen, bevorzugt werden die Reaktionen ohne Katalysator durchgeführt. Die Reaktionen können sowohl in Substanz als auch in einem Lösungsmittel durchgeführt werden. Die Reagenzien der allgemeinen Formeln [8] bis [17] können dabei bezogen auf die Anzahl der Stickstoffatome der Silane und Siloxane (S0) bzw. die Anzahl der Epoxy- bzw. Chloralkylgruppen der Silane und Siloxane (S1) im Unterschuss, äquimolar oder im Überschuss eingesetzt werden. Bei einer bevorzugten Herstellvariante werden die Reagenzien der allgemeinen Formeln [8] bis [17] äquimolar eingesetzt.

Gängige Beispiele für die Verbindungen der allgemeinen Formeln [8] bis [17] sind 1,3-Propansulton, 1,4-Butansulton, Dihydrofuran-2-on, Tetrahydropyran-2-on, Oxepan-2-on, Chloressigsäure bzw. dessen Natrium- oder Kaliumsalz, Bromessigsäure bzw. dessen Natrium- oder Kaliumsalz, N,N-Dimethylglycin, Chlormethansulfonasäure bzw. dessen Natrium- oder Kaliumsalz, Brommethansulfonsäure bzw. dessen Natrium- oder Kaliumsalz, Brommethylphosphonsäure-diethylester, Vinylphosphonsäurediethylester, 3-Diethoxyphosphorylpropionsäure-methylester, Natrium-2-aminopropionat, Taurin, dessen alkylierte Derivate sowie dessen Salze, 2-Aminobenzolsulfonsäure, 3-Aminobenzolsulfonsäure, 4-Aminobenzolsulfonsäure, 3-Aminopropansulfonsäure, 3-Aminopropansulfonsäure sowie dessen Natrium- oder Kaliumsalze, 3-Aminopropanphosphonsäure.

Beispiele für die eingesetzten aminofunktionellen Silane sind Aminopropyl-trimethoxysilan, Aminopropyl-triethoxysilan, Aminoethylaminopropyl-trimethoxysilan, Aminoethylaminopropyl-triethoxysilan, ortho-Aminophenyl-triethoxysilan, meta-Aminophenyl-triethoxysilan, para-Aminophenyl-triethoxysilan, ortho-Aminophenyl-trimethoxysilan, meta- Aminophenyl-trimethoxysilan, para-Aminophenyl-trimethoxysilan, Cyclohexylaminopropyl-trimethoxysilan, Cyclohexylaminopropyl-trimethoxysilan, *N,N-*Dimethylaminopropyl-trimethoxysilan, *N,N-*Dimethylaminopropyl-triethoxysilan, Aminomethyl-trimethoxysilan, Aminomethylmethyldimethoxysilan, Aminomethyl-dimethylmethoxysilan, Aminomethyl-triethoxysilan, Aminomethyl-methyldiethoxysilan, Aminomethyl-dimethylethoxysilan, Cyclohexylaminomethyl-trimethoxysilan, Anilinomethyl-trimethoxysilan, *N*-Piperazinomethyl-trimethoxysilan, *N*-Piperazinomethyl-triethoxysilan, *N*-Piperazinomethyl-methyldimethoxysilan, *N*-Piperazinomethyl-methyldiethoxysilan, *N*-Piperazinomethyl-dimethylmethoxysilan, *N*-Piperazinomethyl-dimethylethoxysilan, *N,N*-Dimethylaminomethyl-trimethoxysilan, *N*-Benzimidazolylpropyl-trimethoxysilan, *N*-Benzimidazolylpropyl-triethoxysilan, *N*-Imidazolyl-trimethoxysilan, *N-*Imidazolyl-triethoxysilan sowie die von VORONKOV et al. in Chem. Heterocycl. Compd. 2001, 37,1358-1368 beschriebenen Silane.

Gängige Beispiele für die eingesetzten aminofunktionellen Siloxane (S0) sind aminofunktionelle lineare oder verzweigte Polydimethylsiloxane oder Siliconharze, die über einen Restgehalt an reaktiven Silanol-, Alkoxysilyl- oder Chlorsilyl-Gruppen verfügen.

Gängige Beispiele für einsetzbare epoxyfunktionelle Silane sind 3-Glycidoxypropyltrimethoxysilan, 3-Glycidoxypropyltriethoxysilan, 5,6-Epoxyhexyltrimethoxysilan, 5,6-Epoxyhexyltriethoxysilan, 2-(3,4-Epoxycyclohexyl)ethyltrimethoxysilan oder 2-(3,4-Epoxycyclohexyl)ethyltriethoxysilan.

Beispiele für geeignete Chlorsilane sind Chlormethyldimethylmethoxysilan, Chlormethylmethyldimethoxysilan, Chlormethyltrimethoxysilan, Chlormethyldimethylethoxysilan, Chlormethylmethyldiethoxysilan, Chlormethyltriethoxysilan, Chlorpropyldimethylmethoxysilan, Chlorpropylmethyldimethoxysilan, Chlorpropyltrimethoxysilan, Chlorpropyldimethylethoxysilan, Chlorpropylmethyldiethoxysilan und Chlorpropyltriethoxysilan.

Zur Herstellung der erfindungsgemäßen Partikel (PS) werden die Partikel (P) mit den Silanen oder Siloxanen (S) umgesetzt. Bevorzugt wird die Umsetzung bei 0°C bis 150°C, besonders bevorzugt bei 20°C bis 80 °C durchgeführt. Das Verfahren kann dabei sowohl unter Einbeziehung von Lösungsmitteln oder lösemittelfrei durchgeführt werden.
Bei der Verwendung von Lösungsmitteln sind protische und aprotische Lösungsmittel und Gemische verschiedener protischer und aprotischer Lösungsmittel geeignet. Bevorzugt kommen protische Lösungsmittel, wie z.B. Wasser, Methanol, Ethanol, Isopropanol, oder polare aprotische Lösungsmittel, wie z.B. THF, DMF, NMP, Diethylether oder Methylethylketon zum Einsatz. Lösungsmittel oder Lösungsmittelgemische mit einem Siedepunkt bzw. Siedebereich von bis zu 120°C bei 0,1 MPa sind bevorzugt.

Die zur Modifizierung der Partikel (P) eingesetzten Silane (S) werden dabei vorzugsweise in einer Menge größer 1 Gew.-% (bezogen auf die Partikel (P)), bevorzugt größer 5 Gew.-%, besonders bevorzugt größer 8 Gew.-% eingesetzt.

Bei der Umsetzung der Partikel (P) mit den Silanen und Siloxanen (S) wird gegebenenfalls unter Vakuum, unter Überdruck oder bei Normaldruck (0,1 MPa) gearbeitet. Die bei der Umsetzung gegebenenfalls gebildeten Abspaltungsprodukte, wie z.B. Alkohole, können entweder im Produkt verbleiben oder/und durch Anlegen von Vakuum bzw. Temperaturerhöhung aus dem Reaktionsgemisch entfernt werden.

Bei der Umsetzung der Partikel (P) mit den Silanen oder Siloxanen (S) können Katalysatoren zugesetzt werden. Dabei können sämtliche zu diesem Zwecke üblicherweise verwendeten Katalysatoren wie organische Zinnverbindungen, z.B. Dibutylzinndilaurat, Dioctylzinndilaurat, Dibutylzinndiacetylacetonat, Dibutylzinndiacetat oder Dibutylzinndioctoat etc., organische Titanate, z.B. Titan (IV) isopropylat, Eisen(III)-Verbindungen, z.B. Eisen(III)-acetylacetonat, oder auch Amine, z.B. Triethylamin, Tributylamin, 1,4-Diazabicyclo-[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin, N-Ethylmorpholin etc., eingesetzt werden. Auch organische oder anorganische Brönstedtsäuren wie Essigsäure, Trifluoressigsäure, Salzsäure, Phoshorsäure und deren Mono- und/oder Diester, wie z.B. Butylphosphat, Isopropylphosphat, Dibutylphosphat etc. und Säurechloride wie Benzoylchlorid sind als Katalysatoren geeignet. Die Katalysatoren werden bevorzugt in Konzentrationen von 0,01-10 Gew.-% eingesetzt. Die verschiedenen Katalysatoren können sowohl in reiner Form als auch als Mischungen verschiedener Katalysatoren eingesetzt werden.

Die verwendeten Katalysatoren werden nach der Umsetzung der Partikel (P) mit den Silanen oder Siloxanen (S) vorzugsweise durch Zugabe von so genannten Anti-Katalysatoren oder Katalysator-Giften deaktiviert, bevor sie zu einer Spaltung der Si-O-Si-Gruppen führen können. Diese Nebenreaktion ist abhängig vom verwendeten Katalysator und muss nicht notwendigerweise eintreten, so dass auf eine Deaktivierung gegebenenfalls auch verzichtet werden kann. Beispiele für Katalysator-Gifte sind bei der Verwendung von Basen z.B. Säuren und bei der Verwendung von Säure z.B. Basen, die die eingesetzten Basen bzw. Säuren neutralisieren. Die durch die Neutralisationsreaktion gebildeten Produkte können gegebenenfalls durch Filtration abgetrennt oder extrahiert werden. Bevorzugt verbleiben die Reaktionsprodukte im Produkt.

Gegebenenfalls ist für die Umsetzung der Partikel (P) mit den Silanen und Siloxanen (S) die Zugabe von Wasser bevorzugt.

Bei der Herstellung der Partikel (PS) aus Partikeln (P) können neben den Silanen oder Siloxanen (S) zusätzlich andere Silane (S2), Silazane (S3), Siloxane (S4) oder andere Verbindungen (L) eingesetzt werden. Bevorzugt sind die Silane (S2), Silazane (S3), Siloxane (S4) oder anderen Verbindungen (L) gegenüber den Funktionen der Oberfläche des Partikels (P) reaktiv. Die Silane (S2) und Siloxane (S4) verfügen dabei entweder über Silanolgruppen oder über hydrolysierbare Silylfunktionen, wobei letztere bevorzugt werden. Dabei können die Silane (S2), Silazane (S3) und Siloxane (S4) über organische Funktionen verfügen, es können aber auch Silane (S1), Silazane (S3) und Siloxane (S4) ohne Organofunktionen verwendet werden. Dabei können die Silane und Siloxane (S) als Mischung mit den Silanen (S2), Silazanen (S3) oder Siloxanen (S4) eingesetzt werden. Daneben können die Partikel auch sukzessive mit den unterschiedlichen Silantypen funktionalisiert werden. Als Verbindungen (L) eignen sich beispielsweise Metallalkoholate, wie z.B. Titan(IV)isopropanolat oder Aluminium(III)butanolat.

Besonders bevorzugt werden dabei Mischungen aus Silanen oder Siloxanen (S) mit Silanen (S2) der allgemeinen Formel [18],

(R⁸O)_{4-b-c-d}(R⁸)_{b}(Z)_{d}Si(R⁸)_{b} [18]

wobei
- **Z**: Halogenatom, Pseudohalogenrest, Si-N-gebundenen Aminrest, Amidrest, Oximrest, Aminoxyrest oder Acyloxyrest bedeutet,
- **b**: 0, 1, 2 oder 3,
- **c**: 0, 1, 2 oder 3,
- **d**: 0, 1, 2 oder 3 bedeuten, **R⁸** die Bedeutungen von **R¹** aufweisen und a+b+c kleiner oder gleich 4 ist.

Dabei steht **b** bevorzugt für 0, 1 oder 2, während **c** und **d** bevorzugt 0 oder 1 bedeuten.

Als Silazane (S3) bzw. Siloxane (S4) werden besonders bevorzugt Hexamethyldisilazan bzw. Hexamethyldisiloxan oder lineare Siloxane mit organofunktionellen Kettenenden eingesetzt.

Die zur Modifizierung der Partikel (P) eingesetzten Silane (S2), Silazane (S3), Siloxane (S4) oder andere Verbindungen (L) werden vorzugsweise in einer Menge größer 1 Gew.-% (bezogen auf die Partikel (P)) verwendet.
Werden zur Herstellung der Partikel (PS) als Partikel (P) Siloxane der allgemeinen Formel [4] eingesetzt, so erfolgt die Anbindung der Silane oder Siloxane (S) durch Hydrolyse und/oder Kondensation, sofern das Siloxan (P) der allgemeinen Formel [4] über freie Si-OH-, Si-OR²- oder Si-X-Funktionen verfügt. Liegen in dem Siloxan (P) ausschließlich Si-O-Si-Funktionen vor, kann die kovalente Anbindung der Silane oder Siloxane (S) durch eine Äquilibrierungsreaktion erfolgen. Die Vorgehensweise sowie die für die Äquilibrierungsreaktion benötigten Katalysatoren sind dem Fachmann geläufig und in der Literatur vielfach beschrieben.

Die aus den Partikeln (P) erhaltenen modifizierten Partikel (PS) können durch gängige Verfahren wie beispielsweise durch Eindampfen der verwendeten Lösungsmittel oder durch Sprühtrocknung als Pulver isoliert werden.
Alternativ kann auf eine Isolierung der Partikel (PS) verzichtet werden.

Zusätzlich können in einer bevorzugten Verfahrensweise im Anschluss an die Herstellung der Partikel (PS) Verfahren zur Desagglomerierung der Partikel eingesetzt werden, wie Stiftmühlen oder Vorrichtungen zur Mahlsichtung, wie Stiftmühlen, Hammermühlen, Gegenstrommühlen, Prallmühlen oder Vorrichtungen zur Mahlsichtung.

In einem weiteren bevorzugten Verfahren wird zur Herstellung der Partikel (PS) von Partikeln (P) ausgegangen, die aus pyrogener Kieselsäure bestehen. Dabei kann die Herstellung der Partikel (PS) aus pyrogener Kieselsäure nach verschiedenen Verfahren erfolgen.

In einem bevorzugten Verfahren wird die trockene pulverförmige pyrogene Kieselsäure direkt mit den feinstverteilten Silanen (S) - gegebenenfalls in Mischungen mit anderen Silanen (S1), Silazanen (S2) oder Siloxanen (S3) - umgesetzt.

Das Verfahren kann kontinuierlich oder diskontinuierlich durchgeführt werden und aus einem oder mehreren Schritten aufgebaut sein. Bevorzugt wird die modifizierte pyrogene Kieselsäure (PS) mittels eines Verfahren hergestellt, bei dem der Herstellungsprozess in getrennten Schritten erfolgt: (A) zunächst Herstellung der hydrophilen pyrogenen Kieselsäure (P), (B) Modifizierung der hydrophilen pyrogenen Kieselsäure (P) mit (1) Beladung der hydrophilen pyrogenen Kieselsäure mit Silanen (S), (2) Reaktion der pyrogenen Kieselsäure mit den aufgebrachten Verbindungen und (3) Reinigung der pyrogenen Kieselsäure von überschüssig aufgebrachten Verbindungen und Abspaltungsprodukten.

Die Oberflächenbehandlung wird bevorzugt durchgeführt in einer Atmosphäre mit weniger als 10 Vol.-% Sauerstoff, besonders bevorzugt weniger als 2,5 Vol.-%; beste Ergebnisse werden erzielt bei weniger als 1 Vol.% Sauerstoff.

Belegung, Reaktion und Reinigung können als diskontinuierlicher oder kontinuierlicher Prozess durchgeführt werden.

Die Belegung (Schritt B1) erfolgt bei Temperaturen von -30 °C bis 250 °C, bevorzugt bei Temperaturen von 20 °C bis 150 °C, besonders bevorzugt bei Temperaturen von 20 °C bis 80 °C; in einer speziellen Ausführungsform erfolgt der Belegungsschritt bei 30 °C bis 50 °C.
Die Verweilzeit beträgt 1 Min bis 24 h, bevorzugt 15 Min bis 240 Min, aus Gründen der Raumzeitausbeute besonders bevorzugt 15 Min bis 90 Min.
Der Druck in der Belegung reicht von schwachem Unterdruck bis 0,2 bar und bis zum Überdruck von 100 bar, wobei aus technischen Gründen Normaldruck, das heißt druckfreies Arbeiten gegenüber Außen-/Atmosphären-Druck bevorzugt ist.

Die Silane (S) bzw. deren Mischungen werden bevorzugt in flüssiger Form zugefügt, und insbesondere dem pulverförmigen Metalloxid (P) zugemischt. Die Verbindungen können dabei in reiner Form oder als Lösungen in bekannten technisch eingesetzten Lösungsmitteln wie z.B. Alkoholen wie z.B. Methanol, Ethanol, oder i-Propanol, Ethern wie z.B. Diethylether, THF, oder Dioxan, oder Kohlenwasserstoffen wie z.B. Hexanen oder Toluol zugemischt werden. Die Konzentration in der Lösung beträgt dabei 5-95 Gew.-%, bevorzugt 30-95 Gew.-%, besonders bevorzugt 50-95 Gew.-%.
Das Zumischen geschieht vorzugsweise durch Düsentechniken oder vergleichbare Techniken, wie effektive Verdüsungstechniken, wie Verdüsen in 1-Stoffdüsen unter Druck (vorzugsweise bei 5 bis 20 bar), Versprühen in 2-Stoffdüsen unter Druck (vorzugsweise Gas und Flüssigkeit 2-20 bar), Feinstverteilen mit Atomizern oder Gas-Feststoff-Austauschaggregaten mit beweglichen, rotierenden oder statischen Einbauten, die eine homogene Verteilung der Silane (S) mit der pulverförmigen pyrogenen Kieselsäure (P) erlauben.
Bevorzugt werden die Silane (S) als feinstverteiltes Aerosol zugefügt, wobei das Aerosol eine Sinkgeschwindigkeit von 0,1-20 cm/s aufweist.
Bevorzugt erfolgt die Beladung der Kieselsäure (P) und die Reaktion mit den Silanen (S) unter mechanischer oder gasgetragener Fluidisierung. Besonders bevorzugt ist die mechanische Fluidisierung.
Eine Gas-getragene Fluidisierung kann durch alle inerten Gase erfolgen wie vorzugsweise N₂, Ar, andere Edelgase, CO₂, etc.
Die Zuführung der Gase zur Fluidisierung erfolgt bevorzugt im Bereich von Leerrohrgasgeschwindigkeiten von 0,05 bis 5 cm/s, besonders bevorzugt von 0,5 bis 2,5 cm/s.
Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.

Die Reaktion erfolgt bevorzugt bei Temperaturen 40 °C bis 200 °C, bevorzugt bei Temperaturen von 40 bis 160 °C und besonders bevorzugt bei Temperaturen von 80 °C bis 150 °C.
Die Reaktionszeit beträgt 5 Min bis 48 h, vorzugsweise 10 Min bis 4 h.

Gegebenenfalls können protische Lösungsmittel hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1 bis 50 Gew.-% an protischen Lösungsmittel bezogen auf die Metalloxide zugefügt; besonders bevorzugt 5 bis 25 Gew.-%. Besonders bevorzugt ist Wasser.
Wahlweise können saure Katalysatoren, von saurem Charakter im Sinne einer Lewis-Säure oder einer Brönsted-Säure, wie Chlorwasserstoff oder basische Katalysatoren, von basischem Charakter im Sinne einer Lewis-Base oder einer Brönsted-Base, wie Ammoniak oder Amine wie Triethylamin, zugesetzt werden. Bevorzugt werden diese in Spuren zugesetzt, d.h. kleiner als 1000 ppm. Besonders bevorzugt werden keine Katalysatoren zugesetzt.

Die Abreinigung erfolgt vorzugsweise bei einer Reinigungstemperatur von 20 °C bis 200°C, bevorzugt bei 50 °C bis 180°C, besonders bevorzugt bei 50 °C. bis 150 °C.
Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, dass bevorzugt ein Mischen und ein Fluidisieren, jedoch nicht völlige Verwirbelung, eintritt.
Der Reinigungsschritt kann weiterhin durch erhöhten Gaseintrag gekennzeichnet sein, entsprechend einer Leerrohrgasgeschwindigkeit von vorzugsweise 0,001 bis 10 cm/s, bevorzugt 0,01 bis 1 cm/s. Dies kann durch alle inerten Gase erfolgen, wie vorzugsweise N₂, Ar, andere Edelgase, CO₂, etc.

Zusätzlich können während der Modifizierung oder im Anschluss an die Reinigung Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Modifizierung, im Schritt B2 der Reaktion durch Presswalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluss an die Reinigung Verfahren zur mechanischen Verdichtung der Kieselsäure eingesetzt, wie Verdichten durch Absaugen des Luft- oder Gasinhaltes durch geeignete Vakuummethoden oder Preßwalzen oder Kombination von beiden Verfahren.

Zusätzlich können in einer besonders bevorzugten Verfahrensweise im Anschluss an die Reinigung Verfahren zur Desagglomerierung der Kieselsäure eingesetzt werden, wie Stiftmühlen, Hammermühlen, Gegenstrommühlen, Prallmühlen oder Vorrichtungen zur Mahlsichtung.

In einem weiteren bevorzugten Verfahren werden Dispersionen der hydrophilen pyrogenen Kieselsäure (P) in Wasser oder typischen industriell eingesetzten Lösungsmitteln wie Alkoholen wie Methanol, Ethanol, i-Propanol, wie Ketonen wie Aceton, Methyl-Ethyl-Keton, wie Ethern wie Diethylether, THF, Kohlenwasserstoffen wie Pentan, Hexanen, Aromaten wie Toluol oder anderen flüchtigen Lösungsmitteln wie Hexamethyldisiloxan oder deren Mischungen mit Silanen (S) umgesetzt.

Das Verfahren kann kontinuierlich oder diskontinuierlich durchgeführt werden und aus einem oder mehreren Schritten aufgebaut sein. Bevorzugt ist ein kontinuierliches Verfahren. Bevorzugt wird die modifizierte pyrogene Kieselsäure mittels eines Verfahren hergestellt, bei dem die Kieselsäure (1) in einem der oben genannten Lösungsmittel eingemischt wird, (2) mit den Silanen (S) zur Reaktion gebracht wird, und (3) von Lösungsmitteln, überschüssigen Silanen und Nebenprodukten befreit wird.

Die Dispergierung (1), Reaktion (2) und Trocknung (3) werden bevorzugt durchgeführt in einer Atmosphäre mit weniger als 10 Vol.-% Sauerstoff, besonders bevorzugt weniger als 2,5 Vol.-%, beste Ergebnisse werden erzielt bei weniger als 1 Vol.-% Sauerstoff.
Das Einmischen (1) kann mittels üblicher Mischaggregate wie Ankerrührer oder Balkenrührer erfolgen. Gegebenenfalls kann das Einmischen unter hoher Scherung mittels Dissolvern, Rotor-Stator-Aggregaten, gegebenenfalls unter direkter Zudosierung in den Scherspalt, mittels Ultraschallgebern oder mittels Mahlaggregaten wie Kugelmühlen erfolgen. Gegebenenfalls können verschiedene der oben genannten Aggregate parallel oder nacheinander eingesetzt werden.

Zur Reaktion (2) der Silane (S) mit der Kieselsäure (P) werden die Silane in reiner Form oder als Lösung in geeigneten Lösungsmitteln der Kieselsäuredispersion zugegeben und homogen vermischt. Die Zugabe der Silane (S) kann dabei in dem Behälter, der zur Herstellung der Dispersion eingesetzt wird oder in einem separaten Reaktionsbehälter erfolgen. Werden die Silane im Dispergierbehälter zugefügt, kann dies parallel zur oder nach Abschluss der Dispergierung erfolgen. Gegebenenfalls können die Silane (S) gelöst im Dispergiermedium direkt im Dispergierschritt zugefügt werden.
Gegebenenfalls wird der Reaktionsmischung Wasser zugefügt. Gegebenenfalls werden der Reaktionsmischung saure Katalysatoren wie Brönsted-Säuren wie flüssige oder gasförmige HCl, Schwefelsäure, Phosphorsäure oder Essigsäure, oder basische Katalysatoren wie Brönsted-Basen wie flüssiger oder gasförmiger Ammoniak, Amine wie NEt₃ oder NaOH zugefügt.
Der Reaktionsschritt wird bei einer Temperatur von 0 °C bis 200 °C, bevorzugt bei 10 °C bis 180 °C und besonders bevorzugt von 20 °C bis 150 °C durchgeführt.

Das Entfernen von Lösungsmitteln, überschüssigen Silanen (S) und Nebenprodukten (3) kann mittels Trocknern oder durch Sprühtrocknen erfolgen.

Gegebenenfalls kann an den Trocknungsschritt noch ein Temperschritt zur Vervollständigung der Reaktion angeschlossen sein.

Die Temperung wird bei einer Temperatur von 50 °C bis 350 °C, bevorzugt bei 50 °C bis 200 °C und besonders bevorzugt von 80 °C bis 150 °C durchgeführt.

Zusätzlich können im Anschluss an die Trocknung bzw. Temperung Verfahren zur mechanischen Verdichtung der Kieselsäure (PS) eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

In einer weiteren besonders bevorzugten Verfahrensweise werden im Anschluss an die Trocknung bzw. Temperung Verfahren zur mechanischen Verdichtung der Kieselsäure eingesetzt, wie Verdichten durch Absaugen des Luft- oder Gasinhaltes durch geeignete Vakuummethoden, oder Presswalzen oder Kombination von beiden Verfahren.

Zusätzlich können in einer besonders bevorzugten Verfahrensweise im Anschluss an die Trocknung bzw. Temperung Verfahren zur Desagglomerierung der Kieselsäure eingesetzt werden, wie Stiftmühlen, Hammermühlen, Gegenstrommühlen, Prallmühlen oder Vorrichtungen zur Mahlsichtung.

Ein weiterer Gegenstand der Erfindung sind wässrige Dispersionen (W) enthaltend die erfindungsgemäßen Partikel (PS).

Die erfindungsgemäßen Partikel (PS) können zur Herstellung der Dispersionen (W) in die wässrige Flüssigkeit zugegeben werden und durch spontane Benetzung, oder durch Schütteln, wie mit einem Taumelmischer, oder ein High-Speed-Mixer, oder durch Rühren, wie durch Balkenrührer oder Dissolver eingearbeitet werden. Bei geringen Partikelkonzentrationen unter 10 Gew.-% reicht im Allgemeinen einfaches Rühren zur Einarbeitung der Partikel in die Flüssigkeit. Bevorzugt ist das Einarbeiten der Partikel (PS) in die Flüssigkeit bei hohem Schergefälle. Anschließend bzw. parallel zum Einarbeiten erfolgt das Dispergieren der Partikel (PS). Bevorzugt ist paralleles Dispergieren. Dies kann durch ein Dispergiersystem in dem ersten Behältnis geschehen, oder durch Umpumpen in externen Rohrleitungen, die ein Dispergierorgan enthalten aus dem Behältnis unter bevorzugt geschlossener Rückführung in das Behältnis. Durch eine teilweise Rückführung, uhd teilweise kontinuierliche Entnahme kann dieser Prozess bevorzugt kontinuierlich gestaltet werden.
Hierfür sind vorzugsweise schnellaufende Rührer, schnellaufende Dissolver, z.B. mit Umlaufgeschwindigkeiten von 1-50 m/s, schnellaufende Rotor-Stator Systeme, Sonolatoren, Scherspalte, Düsen, Kugelmühlen geeignet.

Insbesondere geeignet ist zur Dispergierung der erfindungsgemäßen Partikel (PS) in der erfindungsgemäßen wässrigen Dispersion (W) der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen, oder in Durchflusssysteme, die, gegebenenfalls durch eine Rohrleitung oder Rohrwand abgetrennter Systeme, einen oder mehrere Ultraschallgeber enthalten.

Die Herstellung der wässrigen Dispersionen (W) kann in diskontinuierlichen und in kontinuierlichen Verfahren erfolgen. Bevorzugt sind kontinuierliche Verfahren.

Selbstverständlich kann die erfindungsgemäße wässrige Dispersion (W) auch auf andere Weise hergestellt werden. Es hat sich jedoch gezeigt, dass die Verfahrensweise kritisch ist und nicht alle Herstellungsarten stabile Dispersionen ergeben.

Die Verfahren haben den Vorteil, daß sie sehr einfach in der Durchführung sind und wässrige Dispersionen (W) mit sehr hohen Feststoffgehalten hergestellt werden können.

Die erfindungsgemäßen wässrigen Dispersionen (W) weisen vorzugsweise einen Gehalt an erfindungsgemäßen Partikeln (PS) von 5-60 Gew.-% auf, bevorzugt 5-50 Gew.-%, besonders bevorzugt 10-40 Gew.-% und ganz besonders bevorzugt 15-35 Gew.-%.

Die erfindungsgemäßen wäßrigen Dispersionen (W) mit hohem Gehalt an erfindungsgemäßen Partikeln (PS) sind insbesondere dadurch gekennzeichnet, dass sich niedrigviskose Dispersionen erhalten lassen. Dies bedeutet, dass Dispersionen mit einem Partikelgehalt von vorzugsweise 5 bis 60 Gew.-% eine Viskosität von kleiner 1000 mPas, bevorzugt eine Viskosität von 800 bis 10 mPas, besonders bevorzugt eine Viskosität von 700 bis 50 mPas aufweisen, wobei die Viskosität gemessen wurde mit einem Kegel-Platte-Sensor-System mit 105 µm Meßspalt, bei 25 °C und einer Scherrate von 10 s⁻¹.

Die erfindungsgemäßen wäßrigen Dispersionen (W) mit hohem Gehalt an erfindungsgemäßen Partikeln (PS) zeichnen sich ferner dadurch aus, dass sie eine ausgezeichnete Lagerstabilität aufweisen. Das heisst, dass die Viskosität einer Dispersion nach einer Lagerzeit von 4 Wochen bei 40 °C maximal um den Faktor 1,5, bevorzugt maximal um den Faktor 1,25, besonders bevorzugt maximal um den Faktor 1,1 und ganz besonders bevorzugt um den Faktor 1 gegenüber der Viskosität ummittelbar nach Herstellen der Dispersion gestiegen ist, wobei die Viskosität gemessen wurde mit einem Kegel-Platte-Sensor-System mit 105 µm Meßspalt, bei 25°C und eine Scherrate von 10 s⁻¹.

Die erfindungsgemäßen wässrigen Dispersionen (W) mit hohem Gehalt an erfindungsgemäßen Partikel (PS) zeichnen sich ferner dadurch aus, dass sie eine ausgezeichnete Lagerstabilität aufweisen. Das heißt, dass die Dispersionen nach einer Lagerzeit von 4 Wochen bei 40 °C eine Fließgrenze von kleiner 100 Pa, bevorzugt kleiner 10 Pa, besonders bevorzugt kleiner 1 Pa aufweisen und ganz besonders bevorzugt kleiner 0,1 Pa, jeweils gemessen mit der Flügelkörpermethode bei 25°C gemäß Q. D. Nguyen, D. Boger, J. Rheol. 1985, 29, 335.

Die erfindungsgemäßen wässrigen Dispersionen (W) mit hohem Gehalt an erfindungsgemäßen Partikel (PS) zeichnen sich ferner dadurch aus, daß sie eine mittlere Partikelgröße, gemessen als mittlerer hydrodynamischer Äquivalenzdurchmesser in Form des Z-Average durch Photonenkorrelationsspektroskopie, von kleiner 1000 nm, bevorzugt 1 nm bis 800 nm und besonders bevorzugt von 10 nm bis 500 nm aufweisen.

Die erfindungsgemäßen wässrigen Dispersionen (W) können gegebenenfalls Fungizide oder Bakterizide, wie Methylisothiazolone oder Benzisothiazolone enthalten.

Ein weiterer Gegenstand der Erfindung ist die Verwendung der erfindungsgemäßen Partikel (PS) zur Herstellung von Kompositmaterialien (K)..
Für die Herstellung der Kompositmaterialien (K) kommen sowohl anorganische als auch organische polare, basische, saure und ionische Matrixmaterialien (M) zum Einsatz. Beispiele für derartige Polymermatrizes (M) sind Polyamide, Polyimide, Polycarbonate, Polyester, Polyetherimide, Polyethersulfone, Polyphenylenoxide, Polyphenylensulfide, Polysulfone(PSU), Polyphenylsulfone (PPSU), Polyurethane, Polyvinylchloride, Polytetrafluorethylene (PTFE), Polystyrole (PS), Polyvinylalkohole (PVA), Polyetherglykole (PEG), Polyphneylenoxide (PPO), Polyaryletherketone, sowie sulfonierte organische Polymere. Insbesondere eignen sich sulfonierte organische Polymere, beispielsweise sulfonierte Polysulfone, sulfonierte Polyaryletherketone (s-PEK, s-PEEK, s-PEEKK, s-PEKK, s-PEKEKK), sulfonierte Polyethersulfone (PES), sulfonierte Polyphenylethersulfone (s-PPSU), sulfonierte Polyimide, sulfonierte Styrol/Ethylen-Copolymere (s-SES), sulfonierte Polystyrole, sulfonierte Styrol/Butadien-Copolymere (s-SBS), sulfonierte perfluorierte Polymere (z.B. Nafion®), teilweise fluorierte sulfonierte Polymere und sulfonierte aminische Polymere wie z.B. sulfonierte Polybenzimidazole, alkylsulfonierte Polybenzimidazole, sulfoarylierte Polybenzimidazole und sulfonierte Imidazole.

Desweiteren eignen sich als Matrixmaterialien (M) auch rein basische Polymere, wie z.B. Polybenzimidazole, Polyimidazole und Polyamide.

Polymere, die sich ebenfalls als Matrix (M) eignen, sind oxidische Materialien, die nach gängigen, dem Fachmann bekannten Sol-Gel-Verfahren zugänglich sind. Nach dem Sol-Gel-Verfahren werden hydrolysierbare und kondensierbare Silane und/oder metallorganische Reagenzien mittels Wasser und gegebenenfalls in Gegenwart eines Katalysators hydrolysiert und durch geeignete Methoden zu den silikatischen bzw. oxidischen Materialien gehärtet.
Tragen die Silane oder metallorganischen Reagenzien organofunktionelle Gruppen (wie z.B. Epoxy-, Methacryl-, Amingruppen), die zu einer Vernetzung herangezogen werden können, so können diese modifizierten Sol-Gel-Materialien zusätzlich über ihren organischen Anteil gehärtet werden. Die Härtung des organischen Anteils kann dabei - gegebenenfalls nach Zugabe weiterer reaktiver organischer Komponenten - u.a. thermisch oder durch.UV-Bestrahlung erfolgen. Beispielsweise sind so Sol-Gel-Materialien als Matrix (M) geeignet, die durch Reaktion eines epoxyfunktionellen Alkoxysilans mit einem Epoxidharz und gegebenenfalls in Gegenwart eines Aminhärters zugänglich sind. Ein weitere Beispiel für derartige anorganische-organische Polymere sind Sol-Gel-Materialien (M), die sich aus aminofunktionellen Alkoxysilanen und Epoxidharzen herstellen lassen.
Durch das Einbringen des organischen Anteils kann beispielsweise die Elastizität eines Sol-Gel-Films verbessert werden.
Derartige anorganisch-organische Polymere sind beispielsweise in Thin Solid Films 1999, 351, 198-203 beschrieben.

Tragen die Silane oder metallorganischen Reagenzien saure Gruppen wie z.B. Carbonsäure-, Sulfonsäure- oder Phosphonsäuregruppen oder basische Gruppen, wie z.B. Aminogruppen, so erhält man im Zuge des Sol-Gel-Verfahrens oxidische Materialien, die ihrerseits saure bzw. basische Gruppen enthalten. Bevorzugt sind die sauren bzw. basischen Gruppen über einen nicht-hydrolysierbaren Spacer (z.B. Alkylrest) kovalent an die Silylgruppe gebunden.
Oxidische Sol-Gel-Materialien, die zwitterionische Gruppen aufweisen, sind entsprechend unter Verwerdung von Silanen oder metallorganischen Verbindungen zugänglich, die Strukturelemente ausgewählt aus den allgemeinen Formeln [1] bis [3] enthalten.

Beispiele für silikatischen Materialien, die sich als Matrixmaterial (M) eignen, finden sich u.a in DE 10163518.

Als Matrixmaterialien (M) eignen sich zudem auch Mischungen verschiedener Matrixpolymere bzw. die entsprechenden Copolymere.

Es können zudem auch Reaktivharze als Matrixmaterial (M) eingesetzt werden. Unter Reaktivharzen werden dabei Verbindungen verstanden, die über eine oder mehrere reaktionsfähige Gruppen verfügen. Beispielhaft seien hier als reaktionsfähige Gruppen Hydroxy-, Amino-, Isocyanat-, Epoxid-Gruppen, ethylenisch ungesättigte Gruppen sowie feuchtigkeitsvernetzende Alkoxysilylgruppen genannt. In Gegenwart eines geeigneten Härters bzw. eines Initiators können die Reaktivharze durch thermische Behandlung oder aktinische Strahlung polymerisiert werden.
Die Reaktivharze können dabei in monomerer, oligomerer und polymerer Form vorliegen. Beispiele für gängige Reaktivharze sind: hydroxyfunktionelle Harze wie z.B. hydroxylgruppenhaltige Polyacrylate oder Polyester, die mit isocyanatfunktionellen Härtern vernetzt werden; acryl- sowie methacrylfunktionelle Harze, die nach Zugabe eines Initiators thermisch oder durch aktinische Strahlung gehärtet werden; Epoxidharze, die mit Aminhärtern vernetzt werden; vinylfunktionelle Siloxane, die durch Reaktion mit einem SiH-funktionellen Härter vernetzt werden können; SiOH-funktionelle Siloxane, die durch eine Polykondensation gehärtet werden können.

In den erfindungsgemäßen Kompositmaterialien (K) besteht eine starke Wechselwirkung zwischen den zwitterionischen Partikeln (PS) und der polaren bzw. ionischen Matrix (M). Diese Wechselwirkung ist insbesondere für die hervorragenden mechanischen Eigenschaften der Materialien entscheidend.
In Abhängigkeit von der Art an eingesetztem Matrixmaterial (M) und gegebenenfalls dessen basischen bzw. sauren Gruppen kann die Wechselwirkung mit den erfindungsgemäßen zwitterionischen Partikeln (PS) gesteuert werden. So kann beispielsweise bei Einsatz eines basischen Polymers (M) eine negative Gesamtladung auf den Partikeln erzielt werden. In diesem Fall kann die Verstärkung des Polymers u.a. auf die Wechselwirkung von negativ geladenen Partikeln (PS) und der positiv geladenen Matrix (M) zurückgeführt werden.

Die erfindungsgemäßen Partikel (PS) können im Kompositmaterial (K) dabei einen Verteilungsgradienten aufweisen oder homogen verteilt sein. In Abhängigkeit vom gewählten Matrixsystem kann sich sowohl eine homogene Verteilung als auch eine ungleichmäßige Verteilung der Partikel vorteilhaft bezüglich der mechanischen Stabilität, der Protonenleitfähigkeit und der Kontrolle der Permeabilität von Gasen und Flüssigkeiten auswirken.

Tragen die erfindungsgemäßen Partikel (PS) organofunktionelle Gruppen, die gegenüber einem Reaktivharz (M) reaktiv sind, so können die Partikel (PS) nach Dispergierung der Partikel kovalent an die Matrix (M) angebunden werden.

Die Menge der im Kompositmaterial (K) enthaltenen Partikel (PS) beträgt, bezogen auf das Gesamtgewicht, vorzugsweise mindestens 1 Gew.-%, bevorzugt mindestens 5 Gew.-%, besonders bevorzugt mindestens 10% und vorzugsweise höchstens 90 Gew.-%.
Dabei können die Kompositmaterialien (K) einen oder mehrere verschiedene Partikeltypen (PS) enthalten. So sind beispielsweise Komposite (K) Gegenstand der Erfindung, die modifiziertes Siliciumdioxid sowie modifiziertes Aluminophosphat enthalten.

Die Herstellung der Kompositmaterialien (K) erfolgt vorzugsweise in einem zweistufigen Verfahren. In einer ersten Stufe werden durch Einarbeitung der Partikel (PS) in das Matrixmaterial (M) Dispersionen (D) hergestellt. In einem zweiten Schritt werden die Dispersionen (D) in die Kompositmaterialien (K) überführt.

Zur Herstellung der Dispersionen (D) werden das Matrixmaterial (M) sowie die erfindungsgemäßen Partikel (PS) in einem Lösungsmittel, bevorzugt einem polaren aprotischen oder protischen Lösungsmittel, oder einem Lösungsmittelgemisch gelöst bzw. dispergiert. Geeignete Lösungsmittel sind Dimethylformamid, Dimethylacetamid, Dimethylsulfoxid, N-Methyl-2-pyrrolidon, Wasser, Ethanol, Methanols, Propanol. Dabei kann die Matrix (M) zu den Partikeln (PS) oder die Partikel (PS) zur Matrix (M) gegeben werden. Zur Dispergierung der Partikel (PS) im Matrixmaterial (M) können weitere zur Dispergierung üblicherweise eingesetzte Additive und Zusätze verwendet werden. Zu nennen sind hier Brönstedt-Säuren, wie z.B. Salzsäure, Phosphorsäure, Schwefelsäure, Salpetersäure, Trifluoressigsäure, Essigsäure, Methylsulfonsäure, Brönstedt-Basen, wie z.B. Triethylamin und Ethyldiisopropylamin. Zudem können als weitere Zusätze alle üblicherweise verwendeten Emulgatoren und/oder Schutzkolloide eingesetzt werden. Beispiele für Schutzkolloide sind Polyvinylalkohole, Cellulosederivate oder Vinylpyrrolidon enthaltende Polymerisate. Gebräuchliche Emulgatoren sind z.B. ethoxylierte Alkohole und Phenole (Alkylrest C₄-C₁₈, EO-Grad 3-100), Alkali- und Ammoniumsalze von Alkylsulfaten (C₃-C₁₈), Schwefelsäure- sowie Phosphorsäureester und Alkylsulfonate.
Besonders bevorzugt werden Sulfobernsteinsäureester sowie Alkalialkylsulfate sowie Polyvinylalkohole. Es können auch mehrere Schutzkolloide und/oder Emulgatoren als Gemisch eingesetzt werden.

Liegen Partikel (PS) und Matrix (M) als Feststoff vor, können die Dispersionen (D) auch durch einen Schmelz- oder Extrusionsprozess hergestellt werden.

Alternativ kann die Dispersion (D) hergestellt werden, indem Partikel (P) im Matrixmaterial (M) modifiziert werden. Dazu werden die Partikel (P) im Matrixmaterial (M) dispergiert und anschließend mit den Silanen oder Siloxanen (S) zu den Partikeln (PS) umgesetzt.

Enthalten die Dispersionen (D) wässrige oder organische Lösungsmittel, so werden die entsprechenden Lösungsmittel nach Herstellen der Dispersion (D) entfernt. Die Entfernung des Lösungsmittels erfolgt dabei bevorzugt destillativ. Alternativ kann das Lösungsmittel in der Dispersion (D) verbleiben und im Zuge der Herstellung des Kompositmaterials (K) durch Auftrocknen entfernt werden.

Die Dispersionen (D) können zudem gängige Lösungsmittel sowie die in Formulierungen üblichen Additive und Zusätze erhalten. Zu nennen wären hier u.a. Verlaufshilfsmittel, oberflächenaktive Substanzen, Haftvermittler, Lichtschutzmittel wie UV-Absorber und/oder Radikalfänger, Thixotropiermittel sowie weitere Fest- und Füllstoffe. Zur Erzeugung der jeweils gewünschten Eigenschaftsprofile sowohl der Dispersionen (D) als auch der Komposite (K) sind derartige Zusätze bevorzugt.

Zur Herstellung der Kompositmaterialien (K) werden die Dispersionen (D) enthaltend Partikel (PS) und Matrix (M) auf ein Substrat aufgerakelt. Weitere Verfahren sind Eintauch-, Sprüh-, Giess- und Extrusionsprozesse. Geeignete Substrate sind u.a. Glas, Metall, Holz, Silicium-Wafer, PTFE. Enthalten die Dispersionen (D) Lösungsmittel, so werden die Komposite (K) durch Abdampfen des Lösungsmittels getrocknet.

Handelt es sich bei den Dispersionen (D) um Mischungen von Partikeln (PS) und Reaktivharzen (M), erfolgt die Aushärtung der Dispersionen bevorzugt nach Zugabe eines Härters oder Initiators durch aktinische Strahlung oder thermische Energie.

Die Herstellung der Kompositmaterialien (K) kann alternativ dadurch erfolgen, dass die erfindungsgemäßen Partikel (PS) in der Matrix (M) gebildet werden. Ein gängiges Verfahren zur Herstellung dieser Kompositmaterialien (K) ist die Sol-Gel-Synthese, bei der Partikelvorstufen, wie z.B. hydrolysierbare metallorganische oder siliciumorganische Verbindungen sowie die Silane oder Siloxane (S), in der Matrix (M) gelöst werden und anschließend die Partikelbildung beispielsweise durch Zugabe eines Katalysators initiiert wird. Geeignete Partikelprekursoren sind dabei Tetraethoxysilan, Tetramethoxysilan, Methyltrimethoxysilan, Phenyltrimethoxysilan etc. Die Sol-Gel-Mischungen werden zur Herstellung der Komposite (K) auf ein Substrat aufgebracht und durch Abdampfen des Lösungsmittels getrocknet.

In einer ebenfalls bevorzugten Methode wird ein gehärtetes Polymer durch ein geeignetes Lösemittel aufgequollen und in eine Lösung getaucht, welche als Partikelvorstufen beispielsweise hydrolysierbare metallorganische oder siliciumorganische Verbindungen sowie die Silane oder Siloxane (S) enthält. Die Partikelbildung der in der Polymermatrix angereicherten Partikelvorstufen wird dann im Anschluss daran durch die oben genannten Methoden initiiert.

Die aus den Dispersionen (D) zugänglichen Kompositmaterialien (K) zeigen eine überraschend hohe mechanische Stabilität sowie eine gegenüber dem partikelfreien Polymer drastisch gesteigerte Protonenleitfähigkeit.

Die Kompositmaterialien (K) können aufgrund ihrer hervorragenden chemischen, thermischen und mechanischen Eigenschaften insbesondere als Kleb- und Dichtstoffe, Beschichtungen sowie als Versiegelungs- und Vergussmassen eingesetzt werden. Da die erfindungsgemäßen Kompositmaterialien (K) bei geeigneter Auswahl der Komponenten hervorragende mechanische Eigenschaften kombiniert mit einer hohen Protonenleitfähigkeit aufweisen, eignen sich diese Materialien insbesondere als Membranen in Brennstoffzellen. Besonders bevorzugt sind Brennstoffzellen vom PEMBZ- (Polymerelektrolytmembran-Brennstoffzelle), PSBZ-(Phosphorsäure-Brennstoffzelle) und DMBZ-Typ (Direkt Methanol-Brennstoffzelle). Weitere mögliche Einsatzgebiete der erfindungsgemäßen Materialien (K) als Polymermembranen umfassen die Verwendung bei der Elektrolyse, in Kondensatoren und Batteriesystemen.
Bevorzugte protonenleitende Polymerelektrolytmembranen (PEM), die zur Herstellung von Brennstoffzellen verwendet können, sind aus Polymeren (M) aufgebaut, die über kovalent gebundene protonenleitende Gruppen, insbesondere Carbonsäure-Sulfonsäure-, Phosphonsäure- oder Aminogruppen, verfügen. Beispiele für protonenleitfähige Polymere, die für den Aufbau von Polymerelektrolytmembranen eingesetzt werden, sind sulfonierte perfluorierte Kohlenwasserstoffe, sulfonierte Polyetherketone, sulfonierte Polysulfone, sulfonierte Polyphenylsulfide, sulfonierte Polybenzimidazole, sulfonierte Polystyrole, Polybenzimidazole, silikatische bzw. oxidische Materialien und Mischungen dieser Polymere.

In einer weiteren Ausführungsform der Erfindung sind die erfindungsgemäßen Partikel (PS) dadurch gekennzeichnet, dass sie in polaren Systemen, wie lösemittelfreien Polymeren und Harzen, oder Lösungen, Suspensionen, Emulsionen und Dispersionen von organischen Harzen, in wässrigen Systemen oder in organischen Lösemitteln (z.B.: Polyester, Vinylester, Epoxide, Polyurethane, Alkydharze, u.a.) eine hohe Verdickungswirkung aufweisen, und damit als rheologische Additive in diesen Systemen geeignet sind.
Die Partikel (PS) liefern als rheologisches Additiv in diesen Systemen die erforderte notwendige Viskosität, Strukturviskosität, Thixotropie und eine für das Standvermögen an senkrechten Flächen ausreichende Fließgrenze.

In einer weiteren Ausführungsform der Erfindung sind die oberflächenmodifizierten Partikel (PS) dadurch gekennzeichnet, dass sie in pulverförmigen Systemen Verbackungen oder Verklumpungen, z.B. unter Feuchteeinfluss verhindert, aber auch nicht zur Reagglomeration neigen, und damit zur unerwünschten Separierung, sondern Pulver fließfähig erhalten und somit belastungsstabile und lagerstabile Mischungen ermöglichen.
Im Allgemeinen werden dabei Partikelmengen von 0,1 bis 3 Gew.-% bezogen auf das pulverförmige System eingesetzt.
Dies gilt im Besonderen für den Einsatz in nichtmagnetischen und magnetischen Tonern und Entwicklern und Ladungssteuerungshilfsmitteln, z.B. in kontaktlosen oder elektrofotografischen Druck-/Reproduktionsverfahren die 1- und 2-Komponenten Systeme sein können. Dies gilt auch in pulverförmigen Harzen, die als Anstrichsysteme verwendet werden.

Die Partikel (PS) können in Tonern, Entwicklern und Ladungssteuerungshilfsmitteln verwendet werden. Derartige Entwickler und Toner sind z.B. magnetische 1-Komponenten und 2-Komponenten Toner, aber auch nichtmagnetische Toner. Diese Toner können als Hauptbestandteil Harze, wie Styrol- und Acrylharze aufweisen, und bevorzugt zu Partikelverteilungen von 1-100 µm vermahlen sein, oder können Harze sein, die in Polymerisationsverfahren in Dispersion oder Emulsion oder Lösung oder in Masse zu Partikelverteilungen von bevorzugt 1-100 µm hergestellt wurden. Silizium- und Metalloxid wird bevorzugt eingesetzt zur Verbesserung und Steuerung des Pulver-Fließverhaltens, und/oder zur Regulierung und Steuerung der triboelektrischen Ladungseigenschaften des Toners oder Entwicklers. Derartige Toner und Entwickler können bei elektrophotografischen Print- und Druckverfahren eingesetzt werden, auch sind sie einsetzbar bei direkten Bildübertragungsverfahren.

Die erfindungsgemäßen Partikel (PS) und deren erfindungsgemäße wässrige Dispersionen (W) sind im weiteren dadurch gekennzeichnet, dass sie zur Herstellung von Papierbeschichtungen, wie sie z.B. für Hochglanzphotopapiere eingesetzt werden, geeignet sind.

Die erfindungsgemäßen Partikel (PS) bzw. ihre erfindungsgemäßen wässrigen Dispersionen (W) können ferner zur Stabilisierung partikelstabilisierter Emulsionen, sogenannter Pickering-Emulsionen, eingesetzt werden.

Alle vorstehenden Symbole der vorstehenden Formeln weisen ihre Bedeutungen jeweils unabhängig voneinander auf. In allen Formeln ist das Siliziumatom vierwertig.

Soweit nicht anders angegeben sind alle Mengen- und Prozentangaben auf das Gewicht bezogen, alle Drücke 0,10 MPa (abs.) und alle Temperaturen 20°C.

### Beispiel 1:

### Herstellung eines ammoniumpropylsulfonatfunktionellen Silans (Silan 1)

### Umsetzung von Aminopropyl-trimethoxysilan mit 1,3-Propansulton

Zu einer Lösung von 26, 9 g (0,15 mol) Aminopropyl-trimethoxysilan in 100 ml Toluol werden 18,8 g (0,15 mol) 1,3-Propansulton getropft. Man erhitzt das Reaktionsgemisch für 6 h auf 60°C, filtriert den sich bildenden Niederschlag ab, wäscht den Niederschlag mit Ethylacetat und trocknet das Produkt im Vakuum. Man erhält 35 g eines farblosen Feststoffs.

### Beispiel 2:

### Herstellung eines ammoniumpropylsulfonatfunktionellen Silans (Silan 2)

### Umsetzung von Piperazinomethyl-triethoxysilan mit 1,3-Propansulton

Zu einer Lösung von 3,90 g (15,0 mmol) Piperazinomethyl-triethoxysilan in 10 ml Toluol werden 1, 88 g (15,0 mmol) 1,3-Propansulton getropft. Man erhitzt das Reaktionsgemisch für 6 h auf 60°C, lässt das Reaktionsgemisch abkühlen und trennt die Phasen. Die untere Phase wird im Vakuum zur Trockne eingedampft. Nach Auskochen mit Ethylacetat erhält man 2,70 g eines orangefarbenen Feststoffs.

### Beispiel 3:

### Herstellung eines ammoniumbutylsulfonatfunktionellen Silans (Silan 3)

### Umsetzung von Aminopropyl-trimethoxysilan mit 1,4-Butansulton

Zu einer Lösung von 1,47 g (8,20 mmol) Aminopropyl-trimethoxysilan in 5 ml Toluol werden 1,10 g (8,20 mmol) 1,4-Butansulton getropft. Man erhitzt das Reaktionsgemisch für 6 h auf Rückfluss, lässt das Reaktionsgemisch abkühlen und trennt die Phasen. Die untere Phase wird im Vakuum zur Trockne eingedampft. Nach Auskochen mit Ethylacetat erhält man 1,20 g eines gelben Feststoffs.

### Beispiel 4:

### Herstellung eines Benzimidazoliumpropylsulfonatfunktionellen Silans (Silan 4)

Zu einer Vorlage von 50 ml einer 2,6 molaren Natriummethanolat-Lösung in Methanol wurde 15,5 g (0,13 mol) Benzimidazol zugegeben und das Gemisch für 1 h bei Raumtemperatur gerührt. Nach Abdampfen des Lösungsmittels wurde der Rückstand in trockenem DMF aufgenommen und mit 3 mg 18-Krone-6 sowie 26, 1 g (0,13 mol) γ-Chlorpropyl-trimethoxysilan versetzt. Das Reaktionsgemisch wurde für 2 h auf 90°C erwärmt, auf Raumtemperatur abgekühlt und der gebildete Niederschlag durch Filtration isoliert.
5,00 g der isolierten Zwischenstufe wurden in 20 ml Toluol gelöst und mit 2,18 g (17,9 mmol) 1,3-Propansulton versetzt.
Die Mischung wurde für 6 h auf 60°C erwärmt, auf Raumtemperatur abgekühlt und das entstandene Produkt mit Toluol und Ethylacetat gewaschen. Man erhielt 7,19 g eines farblosen Feststoffs.

### Beispiel 5:

### Herstellung eines konzentrierten ammoniumpropylsulfonatfunktionellen Kieselsols:

Zu 15,0 g eines wässrigen SiO₂-Sols (LUDOX® AS 40 der Firma Grace Davison, 40 Gew.-% SiO₂, pH = 9,1, 22 nm) werden 15,0 g H₂O hinzugegeben. Danach wird innerhalb von 1 min 1,20 g des in Beispiel 1 beschriebenen Silans 1 zugegeben und das Gemisch für 2 h bei 25 °C und 2 h bei 70 °C gerührt. Man erhält ein modifiziertes Kieselsol, das einen leichten Tyndall-Effekt aufweist. Das so modifizierte Kieselsol weist ein negatives ZETA-Potential von -38 mV bei pH 8,8 auf. Bei einem pH-Wert ≤ 7 ist eine Aggregation der Partikel zu beobachten.

### Beispiel 6:

### Herstellung eines konzentrierten ammoniumpropylsulfonatfunktionellen Kieselsols:

Zu 15,0 g eines wässrigen SiO₂-Sols (LUDOX® AS 40 der Firma Grace Davison, 40 Gew.-% SiO₂, pH = 9,1, 22 nm) werden 15,0 g H₂O hinzugegeben. Danach wird innerhalb von 1 min 1,20 g des in Beispiel 3 beschriebenen Silans 3 zugegeben und das Gemisch für 2 h bei 25 °C und 2 h bei 70 °C gerührt. Man erhält ein modifiziertes Kieselsol, das einen leichten Tyndall-Effekt aufweist. Das so modifizierte Kieselsol weist ein negatives ZETA-Potential von -41 mV bei pH 9 auf. Bei einem pH-wert ≤ 6 ist eine Aggregation der Partikel zu beobachten.

### Beispiel 7:

### Herstellung eines konzentrierten ammoniumpropylsulfonatfunktionellen Kieselsols:

Zu 15,0 g eines wässrigen SiO₂-Sols (LUDOX® AS 40 der Firma Grace Davison, 40 Gew.-% SiO₂ pH = 9,1, 22 nm) werden 15,0 g H₂O hinzugegeben. Danach wird innerhalb von 1 min 1,20 g des in Beispiel 4 beschriebenen Silans 4 zugegeben und das Gemisch für 2 h bei 25 °C und 2 h bei 70 °C gerührt. Man erhält ein modifiziertes Kieselsol, das einen leichten Tyndall-Effekt aufweist. Das so modifizierte Kieselsol weist ein negatives ZETA-Potential von -53 mV bei pH 9,3 auf. Bei einem pH-Wert ≤ 5,5 ist eine Aggregation der Partikel zu beobachten.

Das ZETA-Potential der Kieselsole aus den Beispielen 5, 6 und 7 wurde mit Hilfe eines DT 1200 der Firma Dispersion Technologies bestimmt. Der pH-Werte wurde mittels 1 Gew.-%iger Schwefelsäure eingestellt.

### Beispiel 8:

### Herstellung eines ammoniumpropylsulfonatfunktionellen Kieselsols:

Zu 10,0 g eines wässrigen SiO₂-Sols (LUDOX® AS 40 der Firma Grace Davison, 40 Gew.-% SiO₂, pH = 9,1, 22 nm) werden innerhalb von 1 min 0,80 g des in Beispiel 2 beschriebenen Silans 2 gegeben und das Gemisch für 16 h bei 25 °C gerührt. Danach wird die Lösung mit 190,0 g H₂O verdünnt und mit 10 Gew.-% Schwefelsäure auf pH 5 eingestellt. Man erhält ein modifiziertes Kieselsol, das einen leichten Tyndall-Effekt aufweist.

### Beispiel 9:

### Herstellung eines ammoniumpropylsulfonatfunktionellen Kieselsols:

Zu 10,0 g eines wässrigen SiO₂-Sols (LUDOX® AS 40 der Firma Grace Davison, 40 Gew.-% SiO₂ pH = 9,1, 22 nm) werden innerhalb von 1 min 0,80 g des in Beispiel 3 beschriebenen Silans 3 gegeben und das Gemisch für 2h bei 25 °C und weitere 2 h bei 70 °C gerührt. Danach wird die Lösung mit 190 g H₂O verdünnt und mit 10 Gew.-% Schwefelsäure auf pH 5 eingestellt. Man erhält ein modifiziertes Kieselsol, das einen leichten Tyndall-Effekt aufweist.

### Beispiel 10:

### Herstellung eines ammoniumpropylsulfonatfunktionellen Kieselsols:

Zu 10,00 g eines wässrigen SiO₂-Sols (LUDOX® AS 40 der Firma Grace Davison, 40 Gew.-% SiO₂, pH = 9,1, 22 nm) werden innerhalb von 1min 0,80 g des in Beispiel 4 beschriebenen Silans 4 gegeben und das Gemisch für 2h bei 25 °C und weitere 2h bei 70 °C gerührt. Danach wird die Lösung mit 190,0 g H₂O verdünnt und mit 10 Gew.-% Schwefelsäure auf pH 5 eingestellt. Man erhält ein modifiziertes Kieselsol, das einen leichten Tyndall-Effekt aufweist.

### Beispiel 11:

### Herstellung der Nafion®-Kompositmaterialien und deren Austestung

Zu 2,50 g einer Nafion®-Lösung (Nafion® der Firma DuPont, perflouriertes Ionenaustauscher-Harz, 20 Gew.-% in einer Mischung von niederen aliphatischen Alkoholen und Wasser) werden 1,25 g eines verdünnten wässrigen SiO₂-Sols (LUDOX® AS 40 der Firma Grace Davison verdünnt auf 2 Gew.-% SiO₂, mit 10 Gew.-% Schwefelsäure auf pH 5 eingestellt, 22 nm) (Dispersion A) bzw. 1,25 g des modifizierten Kieselsols aus Beispiel 8 (Dispersion B) gegeben. Die Mischungen werden für 10 min gerührt und anschließend weitere 10 min im Ultraschallbad homogenisiert.
Zur Herstellung der Probekörper werden die Dispersionen A und B sowie eine Probe einer ungefüllten Nafion®-Lösung (Probe C) in eine PTFE-Form gegossen und in einem Ofen bei 80 °C für 120 min getrocknet. Nach Zugabe von wenigen Tropfen Wasser können die Membranproben A (aus Dispersion A), B (aus Dispersion B) und C (aus Probe C) aus den PTFE-Formen entnommen werden.

Die so hergestellten Membranproben wurden in 10 mm breite und 60 mm lange Prüfkörper geschnitten und zur Bestimmung ihrer mechanischen Eigenschaften nach EN ISO 527-3 an der Z010 der Firma Zwick vermessen. Jede Probe wurde mit einer konstanten Geschwindigkeit von 50 mm pro Minute bis zum Reißen gestreckt. Jede Messung wurde mit jeweils 3 Prüfkörpern wiederholt und die gemessen Werte gemittelt. Die dabei bestimmten Eigenschaften der jeweiligen Proben sind in Tabelle 1 aufgelistet.

**Tabelle 1. Mechanische Eigenschaften der Kompositmaterialien**

| Probenbezeichnung | A* | B | C* |
|---|---|---|---|
| Zugfestigkeit [MPa] | 7,3 | 12,4 | 11,4 |
| E-Modul [MPa] | 140 | 306 | 190 |

| | | | |
|---|---|---|---|
| * nicht erfindungsgemäß | | | |

Die Beispiele zeigen, dass das erfindungsgemäße Kompositmaterial B wesentlich bessere mechanische Eigenschaften aufweist als die nicht erfindungsgemäßen Materialien A und C.

### Beispiel 12:

### Herstellung der sPEEK-Kompositmaterialien und deren Austestung

Zu 8,0 g einer sPEEK-Lösung (sPEEK der Firma Fumatech, sulfoniertes Polyetheretherketon, 5 Gew. % in DMF) werden 2,0 g eines verdünnten wässrigen SiO₂-Sols (LUDOX® AS 40 der Firma Grace Davison verdünnt auf 2 Gew.-% SiO₂, mit 10 Gew.-% Schwefelsäure auf pH 6 eingestellt, 22 nm) (Dispersion D) bzw. 2,0 g des modifizierten Kieselsols aus Beispiel 8 (Dispersion E) bzw. 2,0 g des modifizierten Kieselsols aus Beispiel 9 (Dispersion F) bzw. 2,0 g des modifizierten Kieselsols aus Beispiel 10 (Dispersion G) gegeben. Die Mischungen werden für 10 min gerührt und anschließend weitere 10 min im Ultraschallbad homogenisiert.
Zur Herstellung der Probekörper werden die Dispersionen D bis G sowie eine Probe einer ungefüllten sPEEK-Lösung (Probe H) in eine PTFE-Form gegossen und in einem Ofen bei 100 °C für 5h getrocknet. Nach Zugabe von wenigen Tropfen Wasser können die Membranproben D (aus Dispersion D), E (aus Dispersion E), F (aus Dispersion F), G (aus Dispersion G) und H (aus Probe H) aus den PTFE-Formen entnommen werden.

Die so hergestellten Membranproben wurden in 3,5 cm lange und 1,5 cm breite Streifen geschnitten. Jede Probe wurde vor der eigentlichen Messung 2h in 25 Gew. % Schwefelsäure bei 70 °C gekocht, anschließend dreimal mit destilliertem Wasser gewaschen und gekocht um Reste der evtl. noch vorhandenen Schwefelsäure zu entfernen. Für die Bestimmung der protonenleitenden Eigenschaften wurden die so vorbehandelten Proben zwischen zwei Platinelektroden eingespannt. Mit Hilfe von AC-Impedanzspektroskopie wurde die Protonenleitfähigkeit bei einer relativen Feuchte von 100 % bei 40 °C bestimmt. Die dabei bestimmten Eigenschaften der jeweiligen Proben sind in Tabelle 2 aufgelistet.

**Tabelle 2. Protonenleitende Eigenschaften der Kompositmaterialien bei 40 °C und 100 % relativen Feuchte**

| Probenbezeichnung | Protonenleitfähigkeit [S cm⁻¹] |
|---|---|
| D* | 0, 031 |
| E | 0,088 |
| F | 0,078 |
| G | 0,082 |
| H* | 0, 06 |

| | |
|---|---|
| * nicht erfindungsgemäß | |

Die Beispiele zeigen, dass die erfindungsgemäßen Kompositmaterialien E, F und G wesentlich höhere Protonenleitfähigkeiten aufweisen als 'die nicht erfindungsgemäßen Materialien D und H.

### Beispiel 13:

### Herstellung einer ammoniumpropylsulfonatfunktionellen pyrogenen Kieselsäure:

Bei einer Temperatur von 25 °C unter Inertgas N₂ werden zu 100 g hydrophiler KIESELSÄURE, mit einer Feuchte < 1 Gew.-% und einem HCl Gehalt < 100 ppm und mit einer spezifischen Oberfläche von 130 m²/g (gemessen nach der BET Methode nach DIN EN ISO 9277/DIN 66132) (erhältlich unter dem Namen HDK S13 bei Wacker-Chemie GmbH, München, D), durch Verdüsen über eine Einstoffdüse (Druck 5 bar), 50 g einer Lösung von 12 g Silan 1 in 38 g einer Wasser-Methanol-Mischung (1:1), und 0,5 g NEt₃ gelöst in 5 ml MeOH, zugefügt. Die so beladene KIESELSÄURE wird bei einer Verweilzeit von 0,25 Stunden bei einer Temperatur von 25 °C weiter mittels Rühren fluidisiert, und anschließend bei 120 °C in einem 100 1 Trockenschrank unter N₂ bei einer Verweilzeit von 3 h zur Reaktion gebracht.
Erhalten wird ein weißes KIESELSÄURE-Pulver mit homogener Silyliermittelschicht.
Die Analysedaten sind in Tabelle 3 aufgeführt.

### Beispiel 14:

### Herstellung einer ammoniumpropylsulfonatfunktionellen pyrogenen Kieselsäure:

In einem 21-Dreihalskolben werden unter N₂-Schutzgas 700 ml Methanol, 500 ml VE-Wasser, 12 g Silan 1 und 0,5 g NEt₃ vorgelegt. Anschließend werden unter Rühren 100 g hydrophile KIESELSÄURE, mit einer Feuchte < 1 Gew.-% und einem HCl Gehalt < 100 ppm und mit einer spezifischen Oberfläche von 130 m²/g (gemessen nach der BET Methode nach DIN EN ISO 9277/DIN 66132) (erhältlich unter dem Namen HDK S13 bei Wacker-Chemie GmbH, München, D) zugefügt. Die Mischung wird 2 h unter Rückfluß erhitzt, anschließend sämtliche flüchtige Bestandteile an einem Rotationsverdampfer entfernt und der weiße pulverförmige Rückstand bei 120 °C in einem 100 1 Trockenschrank unter N₂ bei einer Verweilzeit von 2 h getempert. Erhalten wird ein weißes KIESELSÄURE-Pulver mit homogener Silyliermittelschicht.
Die Analysedaten sind in Tabelle 3 aufgeführt.

**Tabelle 3: Analysendaten der Partikel:**

| | % Kohlenstoff |
|---|---|
| Beispiel 13 | 3,4 |
| Beispiel 14 | 4,0 |

### Beschreibung der Analysenmethoden

### Kohlenstoffgehalt (%C)

Elementaranalyse auf Kohlenstoff; Verbrennen der Probe bei >1000°C im O₂-Strom, Detektion und Quantifizierung des entstehenden CO₂ mit IR; Gerät LECO 244.

### Beispiel 15:

### Herstellen einer wässrigen Dispersion

In einem Hochleistungsmischer Unimix LM6 der Fa. Ekato mit einem Fassungsvermögen von 6 l, wurden 4.0 l vollentsalztes (VE) Wasser vorgelegt und mit wässriger 1M HCl auf pH 4,5 eingestellt. Unter Rühren und bei laufendem Rotor-Stator-Aggregat wurden.über einen Zeitraum von 30 min 1000 g einer Kieselsäure entsprechend Beispiel 13 zudosiert, wobei der pH-Wert durch Zugabe von wässriger 1M HCl bei 4,5 gehalten wurde. Anschließend wurde die Mischung 1 h intensiv geschert, wobei die Temperatur auf ca. 45 °C anstieg.
Es wurde eine dünnflüssige Dispersion erhalten. Die Analysedaten der Dispersion sind in Tabelle 4 aufgeführt.

**Tabelle 4: Analysedaten der Dispersion Beispiel 15**

| | Festgehalt (%) | pH-Wert | Viskosität (1 h); mPas | Viskosität (28 d; 40 °C); mPas | mittlere Partikelgröße (nm) |
|---|---|---|---|---|---|
| Beispiel 15 | 20,1 | 4,7 | 204 | 225 | 248 |

### Beschreibung der Analysenmethoden

1. Feststoffgehalt der Dispersion bestimmt nach folgender Methode: 10 g wässrige Dispersion werden in einer Porzellanschale mit der gleichen Menge Ethanol versetzt und in einem N₂-gespülten Trockenschrank bei 150 °C zur Gewichtskonstanz eingedampft. Die Masse mₛ des trockenen Rückstandes ergibt den Feststoffgehalt gemäß Feststoffgehalt / % = mₛ * 100 / 10 g.
2. pH-Wert gemessen mittels pH-Einstabmesskette.
3. mittlerer Durchmesser der Sinteraggregate gemessen mittels Photokorrelationsspektroskopie nach folgender Methode: Von der zu messenden. Dispersion wird eine Probe mit einem Kieselsäuregehalt von 0,3 Gew.-% durch Einrühren der entsprechenden Menge Ausgangsdispersion mittels Magnetrührer in VE-Wasser hergestellt. Die Proben werden mit einem PCS-Gerät Zetasizer Nano ZS der Fa. Malvern bei 173° im Rückstreumodus gemessen. Der mittlere Partikeldurchmesser wird erhalten als der Z-Average des Fits der Autokorrelationsfunktion.
4. Viskosität der Dispersion bestimmt mit einem Rheometer MCR 600 der Fa. Haake mit Kegel-Platte-Sensorsytem (105 µm Meßspalt) bei 25 °C und einer Scherrate D = 10 s⁻¹.

## Patentansprüche

1. Partikel (PS), herstellbar durch ein Verfahren, bei dem Partikel (P) mit Silanen oder Siloxanen (S) umgesetzt werden, die über mindestens ein Strukturelement, ausgewählt aus den allgemeinen Formeln [1] bis [3],
-NR₂⁺-B-A⁻ [1],
=NR⁺-B-A⁻ [2],
≡N⁺-B-A⁻ [3],
und den protonierten und deprotonierten Formen der Strukturelemente der allgemeinen Formeln [1] bis [3] verfügen, wobei
A einen Sulfonatrest -SO₃, einen Carboxylatrest -C(O)O oder einen Phosphonatrest -P(O) (OR⁷)O,
B (CR¹₂)ₘ, einen durch Heteroatome unterbrochene gegebenenfalls substituierten Alkylrest, Aryl- oder Heteroarylrest,
R und R⁷ Wasserstoff oder einen gegebenenfalls substituierten Kohlenwasserstoffrest und
R¹ Wasserstoff, Halogene oder einen gegebenenfalls substituierten Kohlenwasserstoffrest bedeuten und
m die Werte 1, 2, 3, 4 oder 5 annehmen kann, mit der Maßgabe, dass das Stickstoffatom in der allgemeinen Formel [2] als endocyclisches Stickstoffatom Teil eines aliphatischen Heterozyklus ist, und mit der Maßgabe, dass das Stickstoffatom in der allgemeinen Formel [3] als endocyclisches Stickstoffatom Teil eines aromatischen Heterozyklus ist.

2. Partikel (PS) nach Anspruch 1, welche eine spezifische Oberfläche von 0,1 bis 1000 m²/g besitzen, gemessen nach der BET-Methode nach DIN EN ISO 9277/DIN 66132.

3. Partikel (PS) nach Anspruch 1 und 2, bei denen die Strukturelemente der allgemeinen Formeln [1] bis [3] kovalent angebunden sind .

4. Verfahren zur Herstellung der Partikel (PS) nach Anspruch 1 bis 3, bei dem Partikel (P) mit Silanen oder Siloxanen (S) umgesetzt werden, die über mindestens ein Strukturelement der allgemeinen Formeln [1] bis [3] gemäss Anspruch 1 verfügen.

5. Verfahren nach Anspruch 4, bei dem als Partikel (P) Organopolysiloxane der allgemeinen Formel [4],
[R³₃SiO_{1/2}]ᵢ[R³₂SiO_{2/2}]ⱼ[R³SiO_{3/2}]ₖ[SiO_{4/2}]ₗ [4]
eingesetzt werden, wobei
R³ eine OH-Funktion, einen gegebenenfalls halogen-, hydroxyl-, amino-, epoxy-, phosponato-, thiol-, (meth)acryl-, carbamat- oder auch NCO-substituierten Kohlenwasserstoffrest mit 1-18 Kohlenstoffatomen, wobei die Kohlenstoffkette durch nicht benachbarte Sauerstoff-, Schwefel-, oder NR^{3'}-Gruppen unterbrochen sein kann,
R^{3'} die Bedeutungen von R¹ gemäss Anspruch 1,
i, j, k, 1 einen Wert von größer oder gleich 0 bedeuten, mit der Maßgabe, dass i + j + k + 1 größer oder gleich 3 sind und dass mindestens 1 Rest R³ eine OH-Funktion bedeutet.

6. Verfahren nach Anspruch 4 und 5, bei dem als Partikel (P) pyrogene Kieselsäure eingesetzt wird.

7. Verfahren nach Anspruch 4 bis 6, bei dem als Partikel (P) Kieselsol eingesetzt wird.

8. Wässrige Dispersionen (W) von Partikeln (PS) gemäss Anspruch 1, bei denen die mittlere Partikelgröße, gemessen als mittlerer hydrodynamischer Äquivalenzdurchmesser in Form des Z-Average durch Photonenkorrelationsspektroskopie, kleiner 1000 nm beträgt.

9. Kompositmaterialien (K), welche die Partikel (PS) gemäss Anspruch 1 und Matrixmaterialien (M) enthalten, die ausgewählt werden aus anorganischen und organischen, anorganisch-organischen, polaren und ionischen Materialien.

10. Verwendung der Kompositmaterialien (K) gemäß Anspruch 9 als Membranen.

## Claims

1. Particles (PS) which can be prepared by a process in which particles (P) are reacted with silanes or siloxanes (S) and have at least one structural element selected from among the general formulae [1] to [3],
-NR₂⁺-B-A⁻ [1],
=NR⁺-B-A⁻ [2],
≡N⁺-B-A⁻ [3],
and the protonated and deprotonated forms of the structural elements of the general formulae [1] to [3], where
**A** is a sulfonate radical -SO₃, a carboxylate radical -C(O)O or a phosphonate radical -P(O)(OR⁷)O,
**B** is (CR¹₂)ₘ or a substituted or unsubstituted alkyl, aryl or heteroaryl radical which is interrupted by heteroatoms,
**R and R⁷** are each hydrogen or a substituted or unsubstituted hydrocarbon radical and
**R¹** is hydrogen, a halogen or a substituted or unsubstituted hydrocarbon radical and
**m** can be 1, 2, 3, 4 or 5, with the proviso that the nitrogen atom in the general formula [2] is, as endocyclic nitrogen atom, part of an aliphatic heterocycle and with the proviso that the nitrogen atom in the general formula [3] is, as endocyclic nitrogen atom, part of an aromatic heterocycle.

2. The particles (PS) as claimed in claim 1 which have a specific surface area of from 0.1 to 1000 m²/g, measured by the BET method in accordance with DIN EN ISO 9277/DIN 66132.

3. The particles (PS) as claimed in claims 1 and 2 in which the structural elements of the general formulae [1] to [3] are covalently bound.

4. A process for producing the particles (PS) as claimed in any of claims 1 to 3, wherein particles (P) are reacted with silanes or siloxanes (S) which have at least one structural element of the general formulae [1] to [3] as set forth in claim 1.

5. The process as claimed in claim 4, wherein organopolysiloxanes of the general formula [4],
[R³₃SiO_{1/2}]ᵢ[R³₂SiO_{2/2}]ⱼ[R³SiO_{3/2}]ₖ[SiO_{4/2}]ₗ [4]
where
**R³** is an OH function, an unsubstituted or halogen-, hydroxyl-, amino-, epoxy-, phosphonato-, thiol-, (meth)acryl-, carbamate- or NCO-substituted hydro- carbon radical having 1-18 carbon atoms, where the carbon chain may be interrupted by nonadjacent oxygen, sulfur or N**R^{3'}** groups,
**R^{3'}** has one of the meanings of **R¹** as set forth in claim 1,
**i**, **j**, **k**, **l** are each greater than or equal to 0, with the proviso that **i**+ **j** + **k** + **l** is greater than or equal to 3, and that at least 1 radical **R³** is an OH function, are used as particles (P).

6. The process as claimed in claims 4 and 5, wherein pyrogenic silica is used as particles (P).

7. The process as claimed in any of claims 4 to 6, wherein silica sol is used as particles (P).

8. An aqueous dispersion (W) of particles (PS) as claimed in claim 1, wherein the average particle size measured as mean hydrodynamic equivalent diameter in the form of the number average by photon correlation spectroscopy is less than 1000 nm.

9. A composite material (C) containing the particles (PS) as claimed in claim 1 and matrix materials (M) selected from among inorganic and organic, inorganic-organic, polar and ionic materials.

10. The use of the composite material (C) as claimed in claim 9 as membrane.

## Revendications

1. Particules (PS), pouvant être préparées par un procédé, dans lequel des particules (P) sont mises en réaction avec des silanes ou des siloxanes (S) qui disposent d'au moins un élément de structure, choisi parmi les formules générales [1] à [3],
-NR₂⁺-B-A⁻ [1],
=NR⁺-B-A [2],
≡N⁺-B-A⁻ [3],
et les formes protonées et déprotonées des éléments de structure de formules générales [1] à [3], où
A signifie un radical sulfonate -SO₃, un radical carboxylate -C(O)O ou un radical phosphonate -P(O)(OR⁷)O,
B signifie (CR¹₂)ₘ, un radical alkyle, un radical aryle ou hétéroaryle, interrompu par des hétéroatomes, le cas échéant substitué,
R et R⁷ signifient l'hydrogène ou un radical hydrocarboné le cas échéant substitué et
R¹ signifie l'hydrogène, un halogène ou un radical hydrocarboné le cas échéant substitué et
m peut valoir 1, 2, 3, 4 ou 5,
à condition que l'atome d'azote dans la formule générale [2], en tant qu'atome d'azote endocyclique, soit une partie d'un hétérocycle aliphatique, et à condition que l'atome d'azote dans la formule générale [3], en tant qu'atome d'azote endocyclique, soit une partie d'un hétérocycle aromatique.

2. Particules (PS) selon la revendication 1, qui présentent une surface spécifique de 0,1 à 1000 m²/g, mesurée selon le procédé BET selon la norme DIN EN ISO 9277/DIN 66132.

3. Particules (PS) selon la revendication 1 et 2, dans lesquelles les éléments de structure de formules générales [1] à [3] sont liés par covalence.

4. Procédé pour la préparation des particules (PS) selon la revendication 1 à 3 dans lequel des particules (P) sont mises en réaction avec des silanes ou des siloxanes (S) qui disposent d'au moins un élément de structure de formules générales [1] à [3] selon la revendication 1.

5. Procédé selon la revendication 4, dans lequel on utilise, comme particules (P), des organopolysiloxanes de formule générale [4],
[R³₃SiO_{1/2}]ᵢ[R³₂SiO_{2/2}]ⱼ[R³SiO_{3/2}]ₖ[SiO_{4/2}]ₗ [4]
où
R³ signifie une fonction OH, un radical hydrocarboné le cas échéant substitué par halogène, hydroxyle, amino, époxy, phosphonato, thiol, (méth)acryle, carbamate ou également par NCO, comprenant 1-18 atomes de carbone, où la chaîne hydrocarbonée peut être interrompue par des groupes oxygène, soufre ou NR^{3'} non adjacents,
R^{3'} présente les significations de R¹ selon la revendication 1,
i, j, k, l signifient une valeur supérieure ou égale à 0,
à condition que i + j + k + 1 soit supérieur ou égal à 3 et qu'au moins un radical R³ signifie une fonction OH.

6. Procédé selon la revendication 4 et 5, dans lequel on utilise comme particules (P) une silice pyrogène.

7. Procédé selon la revendication 4 à 6, dans lequel on utilise comme particules (P) un sol silicique.

8. Dispersions aqueuses (W) de particules (PS) selon la revendication 1, dans lesquelles la grosseur moyenne des particules, mesurée comme diamètre équivalent hydrodynamique moyen sous forme de la moyenne numérique par spectroscopie par corrélation de photons, est inférieure à 1000 nm.

9. Matériaux composites (K), qui contiennent les particules (PS) selon la revendication 1 et des matériaux de matrice (M) qui sont choisis parmi des matériaux inorganiques et organiques, inorgano-organiques, polaires et ioniques.

10. Utilisation des matériaux composites (K) selon la revendication 9 comme membranes.
